# EUROPÄISCHE PATENTSCHRIFT

(11) **EP 4 251 894 B1**
(45) Veröffentlichungstag und Bekanntmachung des Hinweises auf die Patenterteilung: **17.12.2025**
(21) Anmeldenummer: 21769635.0
(22) Anmeldetag: 30.08.2021
(51) Int. Cl.: F16C 43/02, F16C 17/02, F16C 41/00, F03D 80/70, F03D 80/50, B25J 5/00

(54) **VERFAHREN ZUM WECHSELN VON AN EINER ROTORWELLE EINER ROTORLAGERUNG EINER WINDKRAFTANLAGE ANGEORDNETEN GLEITLAGERPADS**
METHOD FOR CHANGING A SLIDING BEARING PAD ARRANGED ON A ROTOR SHAFT OF A ROTOR BEARING OF A WIND TURBINE
PROCÉDÉ DE CHANGEMENT D'UN COUSSINET DE PALIER LISSE DISPOSÉ SUR UN ARBRE DE ROTOR D'UN PALIER DE ROTOR D'UNE ÉOLIENNE

(30) Priorität: 30.11.2020 AT 510442020; 08.04.2021 AT 502592021; 08.04.2021 AT 502602021
(43) Veröffentlichungstag der Anmeldung: 04.10.2023
(73) Patentinhaber: Miba Gleitlager Austria GmbH, 4663 Laakirchen (AT)
(72) Erfinder: WALDL, Albert, Laakirchen 4663 (AT); LOITESBERGER, Alexander, 4694 Ohlsdorf (AT); LAUBICHLER, Patrick, 4810 Gmunden (AT)
(74) Vertreter: Burger, Hannes
(86) Internationale Anmeldenummer: PCT/AT2021/060300
(87) Internationale Veröffentlichungsnummer: WO 2022/109634

(56) Entgegenhaltungen:
- EP-A1- 3 260 715
- EP-A1- 3 431 752
- EP-A1- 3 460 272
- WO-A1-2020/176919

## Beschreibung

Die Erfindung betrifft ein Verfahren zum Wechseln von einzelnen Gleitlagerpads einer Rotorlagerung.

Aus der WO 2011/127510 A1 ist ein Lagerelement für die Lagerung der Rotornabe einer Windkraftanlage bekannt.

Die Lagerpads von derartigen Lagerungen, wie sie aus der WO 2011/127510 A1 bekannt sind, sind aufgrund ihrer Größe nur schwer zu wechseln.

Die EP 3 460 272 A1 offenbart ein Verfahren und eine Vorrichtung zum Wechseln von Gleitlagerpads in einer Windkraftanlage. Die Vorrichtung wird hierbei zu den einzelnen zu wechselnden Gleitlagerpads hin verschoben.

Die WO 2020/176919 A1 offenbart eine Windkraftanlage mit Gleitlagerpads.

Die EP 3 260 715 A1 offenbart eine Antriebseinheit für Seefahrzeuge.

Aufgabe der vorliegenden Erfindung war es, die Nachteile des Standes der Technik zu überwinden und ein Verfahren zur Verfügung zu stellen, mittels derer ein vereinfachtes Wechseln der einzelnen Lagerpads der Rotorlagerung möglich ist.

Diese Aufgabe wird durch ein Verfahren gemäß den Ansprüchen gelöst. Erfindungsgemäß ist ein Verfahren zum Wechseln von an einer Rotorwelle einer Rotorlagerung einer Windkraftanlage angeordneten Gleitlagerpads vorgesehen, umfassend die Verfahrensschritte:
- Bewegen des zu wechselnden Gleitlagerpads zu einer Entnahmeöffnung durch Drehung der Rotorwelle;
- Lösen eines Axialsicherungselementes oder von Befestigungsschrauben des zu wechselnden Gleitlagerpads;
- Axiales Entfernen des zu wechselnden Gleitlagerpads durch die Entnahmeöffnung;
- Axiales Einsetzen eines neuen Gleitlagerpads durch die Entnahmeöffnung;
- Fixieren des neuen Gleitlagerpads mittels des Axialsicherungselementes oder mittels der Befestigungsschrauben.
Zum axialen Entfernen des zu wechselnden Gleitlagerpads und zum axialen Einsetzen eines neuen Gleitlagerpads wird eine Gleitlagerpadwechselvorrichtung mit einem Manipulationsarm verwendet, wobei der Manipulationsarm zum Koppeln mit dem Gleitlagerpad ausgebildet ist. Weiters kann vorgesehen sein, dass der Manipulationsarm relativ zum Grundgestell beweglich ausgebildet ist.

Das erfindungsgemäße Verfahren bringt den Vorteil mit sich, dass durch den Einsatz einer Gleitlagerpadwechselvorrichtung bzw. durch axiales Entfernen der Gleitlagerpads, die Wartung der Windkraftanlage wesentlich vereinfacht werden kann. Dadurch kann nicht nur die Arbeitssicherheit gesteigert werden, sondern zusätzlich auch die Effizienz gesteigert werden.

Weiters kann es zweckmäßig sein, wenn der Manipulationsarm mittels eines Verbindungselementes, insbesondere mittels einer Schraube, mit dem Gleitlagerpad gekoppelt wird, wobei an einer Stirnseite des Gleitlagerpads ein mit dem Verbindungselement zusammenwirkendes Formelement, insbesondere ein Gewinde, ausgebildet ist. Dies bringt den Vorteil mit sich, dass mittels des Verbindungselementes das Gleitlagerpad einfach mit dem Manipulationsarm gekoppelt werden kann, sodass ein einfacher Wechsel der Gleitlagerpads ermöglicht wird.

Ferner kann vorgesehen sein, dass das Grundgestell mittels eines Befestigungselementes, insbesondere mittels eines Spanngurtes, an der Rotorwelle befestigt wird. Dies bringt den Vorteil mit sich, dass durch diese Maßnahme die Gleitlagerpadwechselvorrichtung stabil in Position gehalten werden kann, sodass etwaige Gefahren beim Gleitlagerpadwechsel minimiert werden können.

Zusätzlich oder alternativ dazu kann vorgesehen sein, dass das Grundgestell der Gleitlagerpadwechselvorrichtung mittels Befestigungsmittel an der Wellenmutter befestigt wird.

In einer weiteren Alternativvariante kann vorgesehen sein, dass das Grundgestell mittels eines Befestigungsmittels an einem Lagerbock befestigt wird. Dies bringt den Vorteil mit sich, dass durch diese Maßnahme die Gleitlagerpadwechselvorrichtung stabil in Position gehalten werden kann, sodass etwaige Gefahren beim Gleitlagerpadwechsel minimiert werden können.

Weiters kann vorgesehen sein, dass zum Entfernen des Gleitlagerpads vom Manipulationsarm und zum Befestigen eines neuen Gleitlagerpads am Manipulationsarm ein Hebearm verwendet wird, wobei der Hebearm derart an einer Umfangsseite des Gleitlagerpads befestigt wird, dass der Manipulationsarm und der Hebearm gleichzeitig am Gleitlagerpad befestigt sein können. Dies bringt den Vorteil mit sich, dass das Gleitlagerpad mittels der Gleitlagerpadwechselvorrichtung ausgehend von ihrer Betriebsposition axial aus dem äußeren Ringelement herausgezogen werden können und anschließend mittels des Hebearmes beispielsweise mittels eines Kranes vom Manipulationsarm entfernt werden können. Beim Einsetzen eines neuen Gleitlagerpads kann dieses in umgekehrter Reihenfolge mittels des Hebearmes zum Manipulationsarm gehoben werden, um am Manipulationsarm aufgenommen werden zu können und mittels des Manipulationsarmes in Axialrichtung in seine Betriebsposition eingesetzt werden zu können.

Darüber hinaus kann vorgesehen sein, dass die Bewegung des Manipulationsarmes relativ zum Grundgestell der Gleitlagerpadwechselvorrichtung mittels eines Akkuschraubers angetrieben wird. Dies bringt den Vorteil mit sich, dass die Gleitpadwechselvorrichtung keinen eigenen Antrieb aufweisen muss und somit möglichst kostengünstig und einfach aufgebaut sein kann. Darüber hinaus gehört ein Akkuschrauber zum Standardwerkzeug, welches von Wartungspersonal im Normalfall immer mitgeführt wird.

Ein Beispiel für eine Gleitlagerpadwechselvorrichtung zum Wechseln von an einer Rotorwelle einer Rotorlagerung einer Windkraftanlage angeordneten Gleitlagerpads umfasst:
- ein Grundgestell;
- einen Manipulationsarm, welcher relativ zum Grundgestell verschiebbar ist,
wobei der Manipulationsarm zum Koppeln mit dem Gleitlagerpad ausgebildet ist.

Die Gleitlagerpadwechselvorrichtung bringt den Vorteil mit sich, dass durch den Einsatz der Gleitlagerpadwechselvorrichtung bzw. durch axiales Entfernen der Gleitlagerpads, die Wartung der Windkraftanlage wesentlich vereinfacht werden kann. Dadurch kann nicht nur die Arbeitssicherheit gesteigert werden, sondern zusätzlich auch die Effizienz gesteigert werden.

Gemäß einer Weiterbildung ist es möglich, dass der Manipulationsarm an einem Führungsschlitten angeordnet ist, welcher mit einer Linearführung gekoppelt ist, wobei der Führungsschlitten mittels einer Stellspindel relativ zum Grundgestell verschiebbar ist. Dies bringt den Vorteil mit sich, dass durch diese Maßnahme der Manipulationsarm einfach relativ zum Grundgestell bewegt werden kann, um den Gleitlagerpadwechsel zu ermöglichen.

Ferner kann es zweckmäßig sein, wenn die Stellspindel mit einem Wellenstummel drehmomentgekoppelt ist, wobei der Wellenstummel derart ausgebildet ist, dass er mit einem Ackuschrauber koppelbar ist. Dies bringt den Vorteil mit sich, dass die Gleitpadwechselvorrichtung keinen eigenen Antrieb aufweisen muss und somit möglichst kostengünstig und einfach aufgebaut sein kann. Darüber hinaus gehört ein Akkuschrauber zum Standardwerkzeug, welches von Wartungspersonal im Normalfall immer mitgeführt wird. Alternativ dazu kann vorgesehen sein, dass am Wellenstummel eine Handkurbel angeordnet ist.

Darüber hinaus kann vorgesehen sein, dass eine erste Rollenbahn und eine zweite Rollenbahn mit dem Grundgestell gekoppelt sind, wobei die erste Rollenbahn und die zweite Rollenbahn jeweils mehrere Auflagerollen aufweisen, wobei die erste Rollenbahn und die zweite Rollenbahn in einem Abstand zueinander angeordnet sind, wobei der Manipulationsarm zwischen der ersten Rollenbahn und der zweiten Rollenbahn angeordnet ist. Durch die erste Rollenbahn und die zweite Rollenbahn kann das Gleitlagerpad schonend aus seinem Sitz in der Gleitlagerung heraus bewegt werden. Hierbei kann das Gleitlagerpad an den beiden Rollenbahnen aufliegen und somit einfach axial verschoben werden.

Weiters kann vorgesehen sein, dass die erste Rollenbahn und die zweite Rollenbahn an einem vorderen Ende nach unten gekröpft sind. Dies bringt den Vorteil mit sich, dass durch diese Maßnahme das Gleitlagerpad einfach über eine auf der Rotorwelle befestigte Wellenmutter hinweg bewegt werden kann.

Gemäß einer besonderen Ausprägung ist es möglich, dass die Linearführung in einem Winkel zu einer Wellenauflagefläche des Grundgestells angeordnet ist. Dies bringt den Vorteil mit sich, dass das Gleitlagerpad nicht nur axial aus seinem Sitz in der Gleitlagerung herausgezogen werden kann, sondern beim axialen Herausziehen des Gleitlagerpads auch gleichzeitig angehoben werden kann.

Weiters kann vorgesehen sein, dass der Manipulationsarm zumindest ein erstes Manipulationsarmteil und ein zweites Manipulationsarmteil aufweist, wobei das erste Manipulationsarmteil zum Koppeln mit dem Gleitlagerpad ausgebildet ist und wobei das erste Manipulationsarmteil in Umfangsrichtung relativ zum zweiten Manipulationsarmteil verschiebbar ist. Dies bringt den Vorteil mit sich, dass durch diese Maßnahme das Gleitlagerpad exakt in seiner Betriebsposition positioniert werden kann.

Weiters kann vorgesehen sein, dass der Manipulationsarm in Radialrichtung relativ zum Führungsschlitten verschiebbar ist. Dies bringt den Vorteil mit sich, dass durch diese Maßnahme das Gleitlagerpad exakt in seiner Betriebsposition positioniert werden kann.

Entsprechend einer vorteilhaften Weiterbildung kann vorgesehen sein, dass der Manipulationsarm an einem Hubschlitten einer Hubvorrichtung angeordnet ist, wobei die Hubvorrichtung zur Vergrößerung des Abstandes zwischen dem Manipulationsarm und der Linearführung dient. Dies bringt den Vorteil mit sich, dass das Gleitlagerpad aktiv von der Rotorwelle abgehoben werden kann.

Insbesondere kann es vorteilhaft sein, wenn der Manipulationsarm zumindest ein erstes Manipulationsarmteil und ein zweites Manipulationsarmteil aufweist, wobei das erste Manipulationsarmteil zum Koppeln mit dem Gleitlagerpad ausgebildet ist, wobei das erste Manipulationsarmteil und das zweite Manipulationsarmteil mittels eines ersten Drehgelenkes miteinander gekoppelt sind, sodass das erste Manipulationsarmteil mitsamt einem damit gekoppelten Gleitlagerpad relativ zum zweiten Manipulationsarmteil schwenkbar gelagert ist. Dies bringt den Vorteil mit sich, dass das Gleitlagerpad aus seinem Sitz in der Gleitlagerung in einer Kombination aus einer axialen Bewegung und einer Drehbewegung herausgedreht bzw. herausgefädelt werden kann.

Ferner kann vorgesehen sein, dass das zweite Manipulationsarmteil mittels eines zweiten Drehgelenkes schwenkbar mit dem Hubschlitten der Hubvorrichtung gekoppelt ist. Dies bringt eine zusätzliche Vereinfachung beim Ausbau des Gleitlagerpads mit sich.

Darüber hinaus kann vorgesehen sein, dass das erste Drehgelenk einen ersten Drehwinkelbegrenzer aufweist, mittels welchem ein Schwenkwinkel zwischen dem ersten Manipulationsarmteil und dem zweiten Manipulationsarmteil begrenzt ist, insbesondere dass der Schwenkwinkel auf kleiner 10°, bevorzugt kleiner 5° begrenzt ist und/oder
dass das zweite Drehgelenk einen zweiten Drehwinkelbegrenzer aufweist, mittels welchem ein Schwenkwinkel zwischen dem zweiten Manipulationsarmteil und dem Hubschlitten der Hubvorrichtung begrenzt ist, insbesondere dass der Schwenkwinkel auf kleiner 10°, bevorzugt kleiner 5° begrenzt ist. Dies bringt den Vorteil mit sich, dass die Gleitlagerpadwechselvorrichtung, insbesondere der Manipulationsarm auf der einen Seite eine gewisse Schwenkbarkeit zum Verkippen des Gleitlagerpads zulässt und durch die Drehwinkelbegrenzung gleichzeitig das Gleitlagerpad trotz eines außermittigen Befestigungspunktes am Gleitlagerpad und somit einer Kippmomenteinleitung angehoben werden kann.

Zum besseren Verständnis der Erfindung, die das Verfahren zum Wechseln von an einer Rotorwelle einer Rotorlagerung einer Windkraftanlage angeordneten Gleitlagerpads betrifft, wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine perspektivische Darstellung eines ersten Ausführungsbeispiels einer Gleitlagerung;
- Fig. 3: ein Längsschnitt des ersten Ausführungsbeispiels der Gleitlagerung;
- Fig. 4: eine perspektivische Ansicht des Längsschnittes des ersten Ausführungsbeispiels der Gleitlagerung;
- Fig. 5: eine perspektivische Ansicht des Längsschnittes des ersten Ausführungsbeispiels der Gleitlagerung, wobei ein Deckel ausgeblendet ist;
- Fig. 6: eine perspektivische Ansicht des ersten Ausführungsbeispiels eines äußeren Ringelementes;
- Fig. 7: eine perspektivische Ansicht des ersten Ausführungsbeispiels einer Rotorwelle mit daran angeordneten Gleitlagerpads;
- Fig. 8: ein Längsschnitt eines dritten Ausführungsbeispiels der Gleitlagerung;
- Fig. 9: eine perspektivische Ansicht des Längsschnittes des dritten Ausführungsbeispiels der Gleitlagerung;
- Fig. 10: ein Querschnitt des dritten Ausführungsbeispiels der Gleitlagerung;
- Fig. 11: eine perspektivische Darstellung eines äußeren Ringelementes des dritten Ausführungsbeispiels der Gleitlagerung;
- Fig. 12: ein Gleitlagerpad des dritten Ausführungsbeispiels der Gleitlagerung in einer ersten perspektivischen Darstellung;
- Fig. 13: das Gleitlagerpad des dritten Ausführungsbeispiels der Gleitlagerung in einer zweiten perspektivischen Darstellung;
- Fig. 14: das Gleitlagerpad des dritten Ausführungsbeispiels der Gleitlagerung in einer dritten perspektivischen Darstellung;
- Fig. 15: ein erstes Ausführungsbeispiel einer Gleitlagerpadwechselvorrichtung in einer ersten perspektivischen Ansicht;
- Fig. 16: das erste Ausführungsbeispiel der Gleitlagerpadwechselvorrichtung in einer zweiten perspektivischen Detailansicht;
- Fig. 17: ein zweites Ausführungsbeispiel der Gleitlagerpadwechselvorrichtung in einer ersten perspektivischen Ansicht;
- Fig. 18: das zweite Ausführungsbeispiel der Gleitlagerpadwechselvorrichtung in einer zweiten perspektivischen Ansicht;
- Fig. 19: ein weiteres Ausführungsbeispiel der Gleitlagerung mit Gleitlagerpads, die mit einem Gleitlagerpadaufnahmering verschraubt sind, in einer ersten perspektivischen Ansicht;
- Fig. 20: das weitere Ausführungsbeispiel der Gleitlagerung mit Gleitlagerpads, die mit dem Gleitlagerpadaufnahmering verschraubt sind, in einer Schnittdarstellung;
- Fig. 21: ein drittes Ausführungsbeispiel der Gleitlagerpadwechselvorrichtung;
- Fig. 22: ein Ausführungsbeispiel eines Hebearmes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

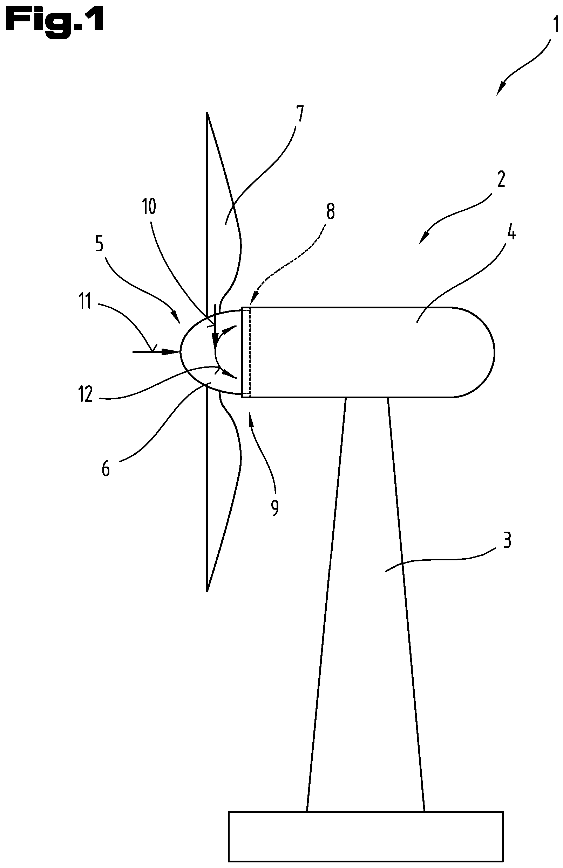

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere ist vorgesehen, dass eine noch näher beschriebene Gleitlagerung 9 als Rotorlagerung 8 eingesetzt wird. Insbesondere kann vorgesehen sein, dass die Rotornabe 6 an einer Rotorwelle 16 angeordnet ist, wobei die Rotorwelle 16 in der Rotorlagerung 8 gelagert ist.

Die Rotorlagerung 8, welche zur Lagerung der Rotornabe 6 am Gondelgehäuse 4 der Gondel 2 dient, ist zur Aufnahme einer Radialkraft 10 und einer Axialkraft 11 ausgebildet. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 10 ein Kippmoment 12 hervorgerufen. Das Kippmoment 12 kann ebenfalls durch eine ungleichmäßige Belastung der Rotorblätter 7 hervorgerufen werden. Dieses Kippmoment 12 kann mittels einer zweiten Lagerung aufgenommen werden, welche in einem Abstand zur Rotorlagerung 8 angeordnet ist. Die zweite Lagerung kann beispielsweise im Bereich des Generators ausgebildet sein.

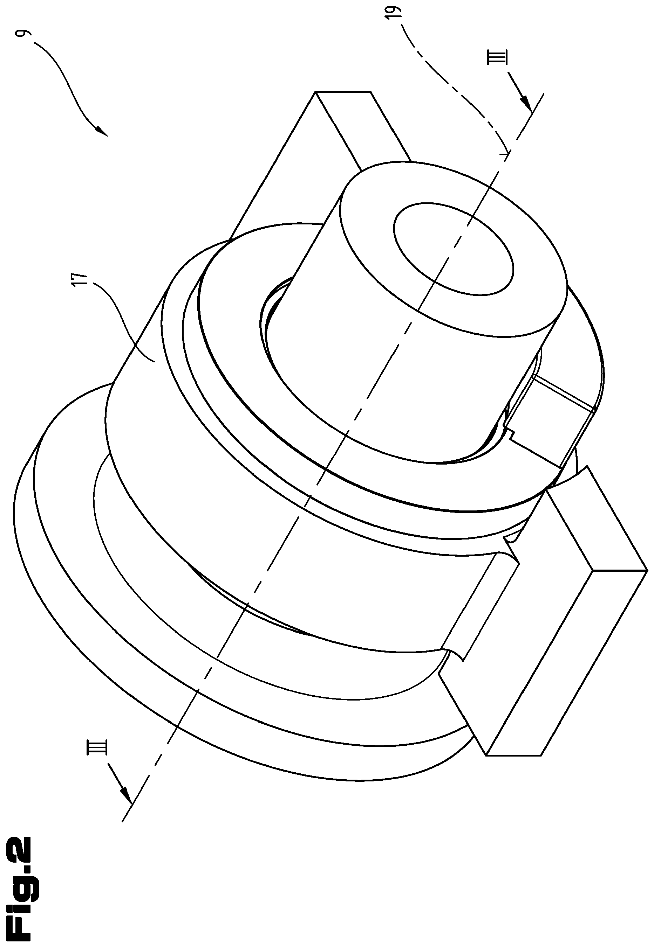

Fig. 2 zeigt ein erstes Ausführungsbeispiel der in der Gondel 2 verbauten Gleitlagerung 9. Natürlich kann die in Fig. 2 dargestellte Gleitlagerung 9 auch in sämtlichen anderen Industrieanwendungen außerhalb von Windkraftanlagen eingesetzt werden. Die Gleitlagerung 9 ist in Fig. 2 in einer perspektivischen Ansicht dargestellt.

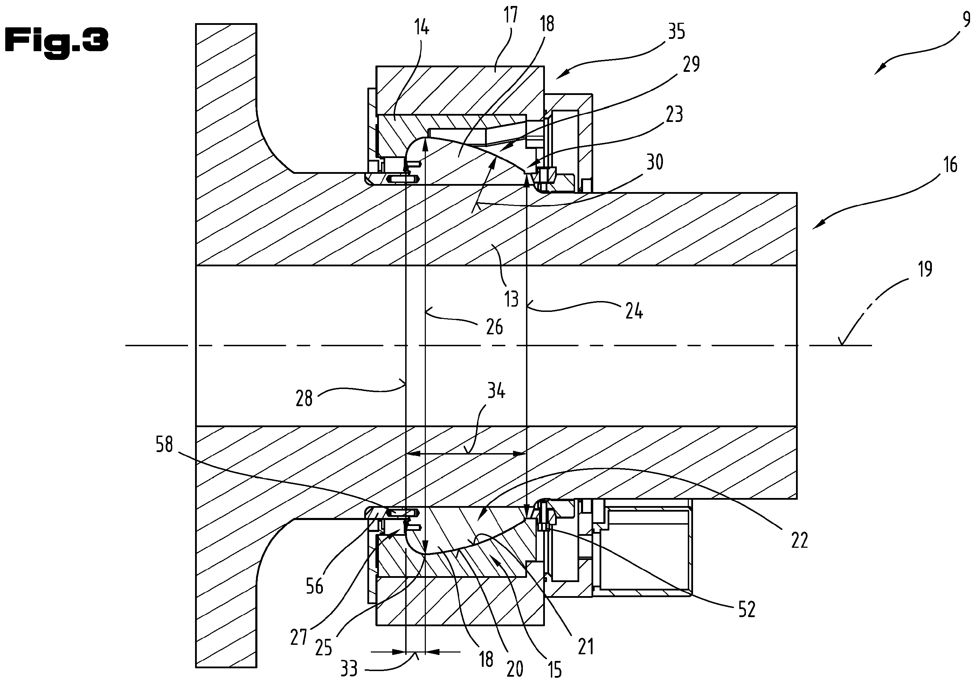

In Fig. 3 ist das erste Ausführungsbeispiel der Gleitlagerung 9 in einer Längsschnittdarstellung gezeigt.

In weiterer Folge wird die Gleitlagerung 9 anhand einer Zusammenschau der Figuren 2 und 3 beschrieben.

Wie aus den Figuren 2 und 3 ersichtlich, kann vorgesehen sein, dass die Gleitlagerung 9 ein inneres Ringelement 13 und ein äußeres Ringelement 14 aufweist. Zwischen dem inneren Ringelement 13 und dem äußeren Ringelement 14 ist ein Gleitlagerelement 15 angeordnet, welches zur rotatorischen Gleitlagerung des inneren Ringelementes 13 relativ zum äußeren Ringelement 14 dient.

Im Ausführungsbeispiel, welches in den Figuren 2 und 3 dargestellt ist, ist das innere Ringelement 13 als Rotorwelle 16 ausgebildet. Natürlich kann das innere Ringelement 13 auch eine sonstige Welle sein. Weiters ist es auch denkbar, dass das innere Ringelement 13 als eigenständiges Bauteil ausgebildet ist, welches an einer Welle, insbesondere einer Rotorwelle 16 aufgenommen ist.

Wie besonders gut aus Fig. 3 ersichtlich, kann vorgesehen sein, dass das äußere Ringelement 14 in einem Lagerbock 17 aufgenommen ist. Insbesondere kann vorgesehen sein, dass der Lagerbock 17 mit dem Gondelgehäuse 4 gekoppelt ist oder alternativ auch direkt im Gondelgehäuse 4 ausgeformt ist. Bei diesem Ausführungsbeispiel kann somit vorgesehen sein, dass das äußere Ringelement 14 starr mit dem Gondelgehäuse 4 gekoppelt ist und das innere Ringelement 13 mittels des Gleitlagerelementes 15 relativ zum äußeren Ringelement 14 bezüglich einer Rotationsachse 19 verdrehbar ist.

Weiters kann vorgesehen sein, dass der Lagerbock 17 direkt als äußeres Ringelement 14 dient.

Somit ist die Rotorwelle 16 mittels der Gleitlagerung 9 drehbar im Gondelgehäuse 4 aufgenommen.

Wie aus den Figuren 2 und 3 weiters ersichtlich, kann vorgesehen sein, dass das Gleitlagerelement 15 mehrere einzelne Gleitlagerpads 18 umfasst, welche über den Umfang verteilt zwischen dem inneren Ringelement 13 und dem äußeren Ringelement 14 angeordnet sind.

Die einzelnen Gleitlagerpads 18 sind durch den in Fig. 3 gezeigten Aufbau im Betriebszustand der Gleitlagerung 9 fest mit dem inneren Ringelement 13 gekoppelt und drehen sich somit mit diesem relativ zum äußeren Ringelement 14. Um die Drehbewegung zwischen dem inneren Ringelement 13 und dem äußeren Ringelement 14 zu ermöglichen, ist an den einzelnen Gleitlagerpads 18 jeweils eine Lagerfläche 20 ausgebildet, welche im einsatzbereiten Zustand der Gleitlagerung 9 an einer Gegenfläche 21 des äußeren Ringelementes 14 anliegt. Die Gegenfläche 21 ist an einer Innenseite 22 des äußeren Ringelements 14 angeordnet.

Die Lagerfläche 20 des Gleitlagerpads 18 und die Gegenfläche 21 des äußeren Ringelements 14 sind als Gleitflächen ausgebildet, welche im Betrieb der Gleitlagerung 9 aneinander gleiten. Insbesondere kann vorgesehen sein, dass die Gegenfläche 21 des äußeren Ringelementes 14 als harte, verschleißfeste Oberfläche ausgebildet ist, welche beispielsweise durch einen gehärteten Stahl gebildet sein kann. Die Lagerfläche 20 des Gleitlagerpads 18 kann aus einem im Vergleich zur Gegenfläche 21 weichen Gleitlagerwerkstoff gebildet sein. Natürlich ist es auch denkbar, dass die Lagerfläche 20 eine Gleitbeschichtung aufweist.

Wie aus Fig. 3 besonders gut ersichtlich, kann vorgesehen sein, dass die einzelnen Gleitlagerpads 18 jeweils eine in Axialrichtung gesehen gewölbte Lagerfläche 20 aufweisen.

Wie aus Fig. 3 weiters ersichtlich, kann vorgesehen sein, dass die Lagerfläche 20 im Bereich einer ersten Stirnseite 23 des Gleitlagerpads 18 einen ersten Durchmesser 24 aufweist. Die Lagerfläche 20 kann ausgehend von dieser ersten Stirnseite 23 eine Durchmesservergrößerung hin zu einem Scheitelpunkt 25 aufweisen. Die Lagerfläche 20 kann im Scheitelpunkt 25 einen Durchmesser 26 aufweisen.

Ausgehend vom Scheitelpunkt 25 kann die Lagerfläche 20 zu einer zweiten Stirnseite 27 des Gleitlagerpads 18 hin eine Durchmesserverkleinerung aufweisen. Im Bereich der zweiten Stirnseite 27 kann die Lagerfläche 20 einen zweiten Durchmesser 28 aufweisen.

Insbesondere kann vorgesehen sein, dass zwischen der ersten Stirnseite 23 und dem Scheitelpunkt 25 ein Kugelkalottenabschnitt 29 ausgebildet ist. Der Kugelkalottenabschnitt 29 kann die Grundform einer Kugelkalotte mit einem Kugelkalottenradius 30 aufweisen.

Weiters kann vorgesehen sein, dass der Scheitelpunkt 25 in einem Abstand 33 von einer zweiten Stirnseite 27 des Gleitlagerpads 18 angeordnet ist. Das Gleitlagerpad 18 kann eine Axialerstreckung 34 aufweisen.

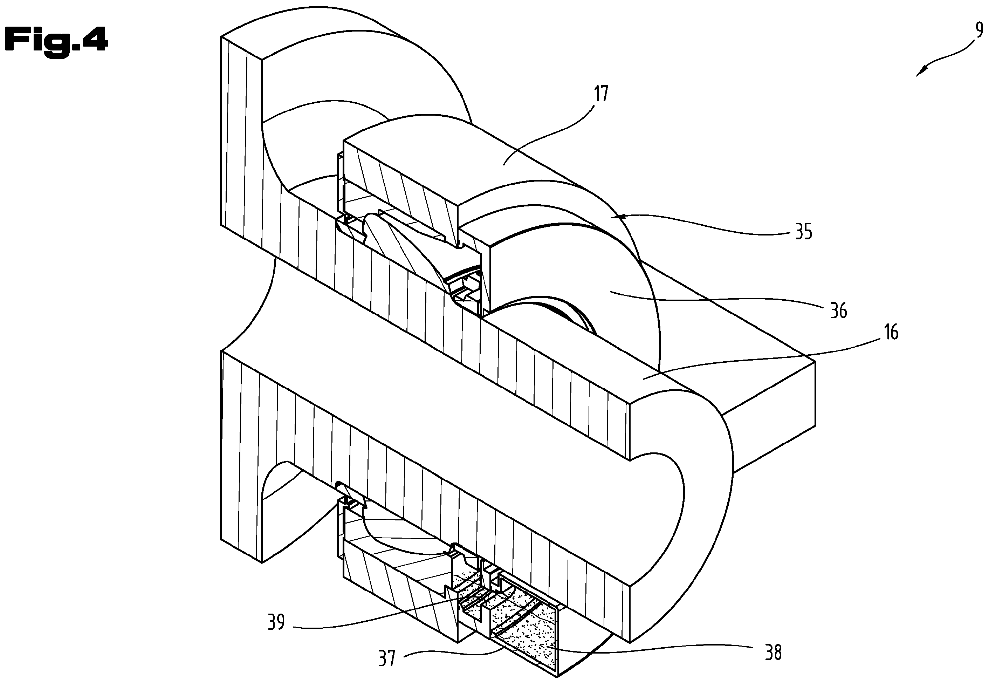

Fig. 4 zeigt das erste Ausführungsbeispiel der Gleitlagerung 9 in einer perspektivischen Schnittdarstellung, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass an einer Axialstirnseite 35 des Lagerbockes 17 ein Deckel 36 angeordnet ist. Der Deckel 36 dient zum Verschließen des Innenraumes des Lagerbockes 17.

Wie aus Fig. 4 weiters ersichtlich, kann vorgesehen sein, dass an dem Deckel 36 ein Schmierölreservoir 37 angeschlossen ist, welches zur Aufnahme von Schmieröl 38 dient. Insbesondere kann hierbei vorgesehen sein, dass im Deckel 36 eine Durchgangsöffnung 39 ausgebildet ist, durch welche das Schmieröl 38 vom Schmierölreservoir 37 in den Innenraum des Lagerbockes 17 strömen kann.

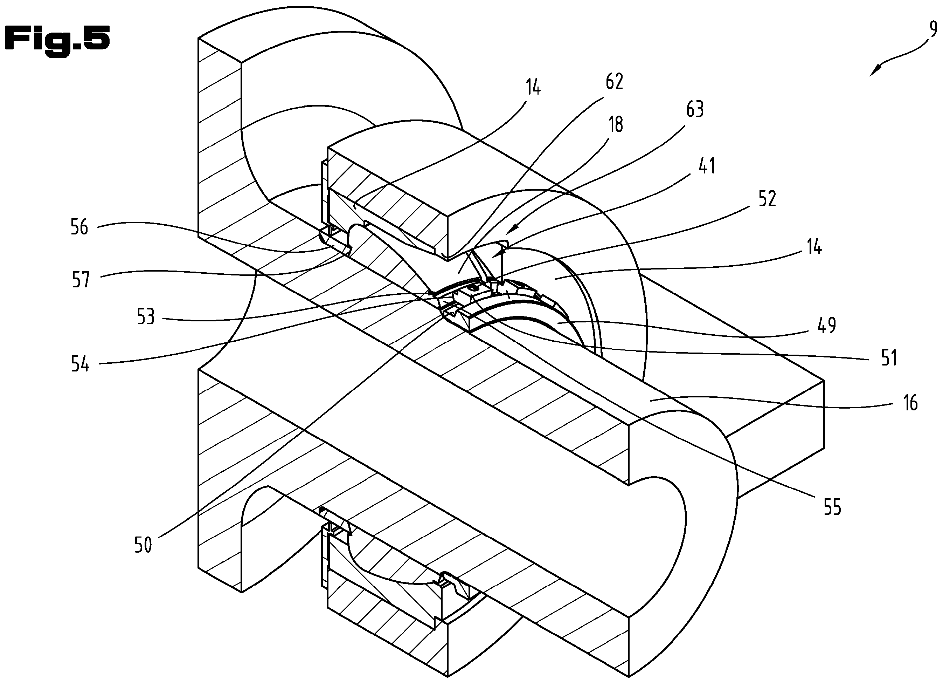

Fig. 5 zeigt eine perspektivische Schnittdarstellung der Gleitlagerung 9, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In Fig. 5 sind der Übersichtlichkeit halber der Deckel 36 und das Schmierölreservoir 37 ausgeblendet. Somit sind die innenliegenden Bauteile der Gleitlager 9 sichtbar.

Wie aus Fig. 5 ersichtlich, kann vorgesehen sein, dass im äußeren Ringelement 14 eine Entnahmeöffnung 41 ausgebildet ist, welche zur axialen Entnahme von einzelnen der Gleitlagerpads 18 dient.

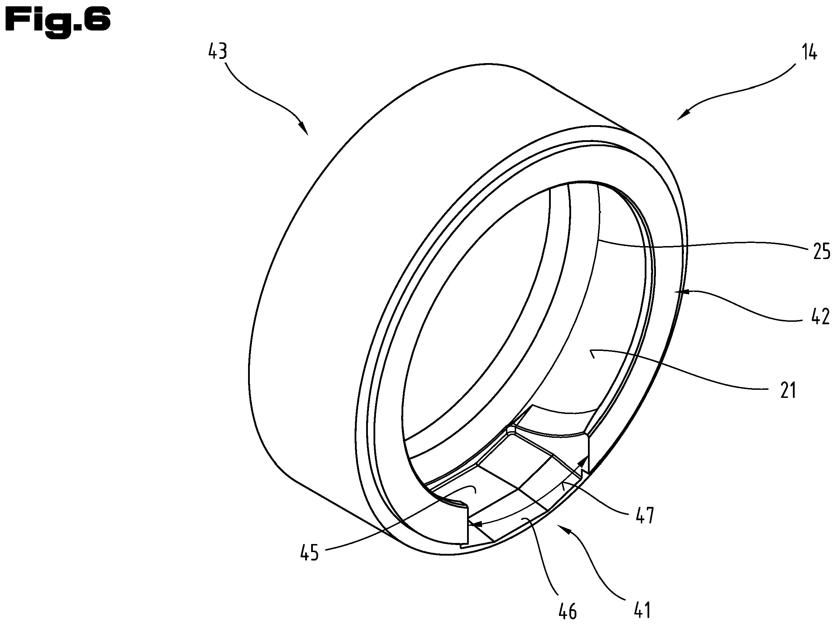

Fig. 6 zeigt eine perspektivische Ansicht des äußeren Ringelementes 14, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In Fig. 6 ist die Entnahmeöffnung 41 besonders gut sichtbar.

Wie aus den Fig. 5 und 6 ersichtlich, kann vorgesehen sein, dass die Entnahmeöffnung 41 die im äußeren Ringelement 14 ausgebildete Gegenfläche 21 zumindest abschnittsweise unterbricht. Insbesondere kann vorgesehen sein, dass sich die Entnahmeöffnung 41 ausgehend von einer ersten Stirnseite 42 des äußeren Ringelementes 14 erstreckt. Insbesondere kann vorgesehen sein, dass sich die Entnahmeöffnung 41 nicht bis zu einer zweiten Stirnseite 43 des äußeren Ringelementes 14 erstreckt. Viel mehr kann sich die Entnahmeöffnung 41 nur bis zum Scheitelpunkt 25 erstrecken.

Wie besonders gut aus einer Zusammenschau der Fig. 3 und 6 ersichtlich, kann vorgesehen sein, dass die Entnahmeöffnung 41 sich zur ersten Stirnseite 42 hin radial aufweitend ausgebildet ist. Insbesondere kann hierbei vorgesehen sein, dass ein erster Entnahmeöffnungsbereich 45 und ein zweiter Entnahmeöffnungsbereich 46 ausgebildet sind, welche eine unterschiedliche radiale Aufweitung aufweisen. Weiters kann vorgesehen sein, dass der zweite Entnahmeöffnungsbereich 46, welcher näher zur ersten Stirnseite 42 des äußeren Ringelementes 14 angeordnet ist, eine größere radiale Aufweitung aufweist, als der erste Entnahmeöffnungsbereich 45.

In einem weiteren, nicht dargestellten Ausführungsbeispiel, kann natürlich auch vorgesehen sein, dass die Entnahmeöffnung 41 das äußere Ringelement 14 radial vollständig durchdringt.

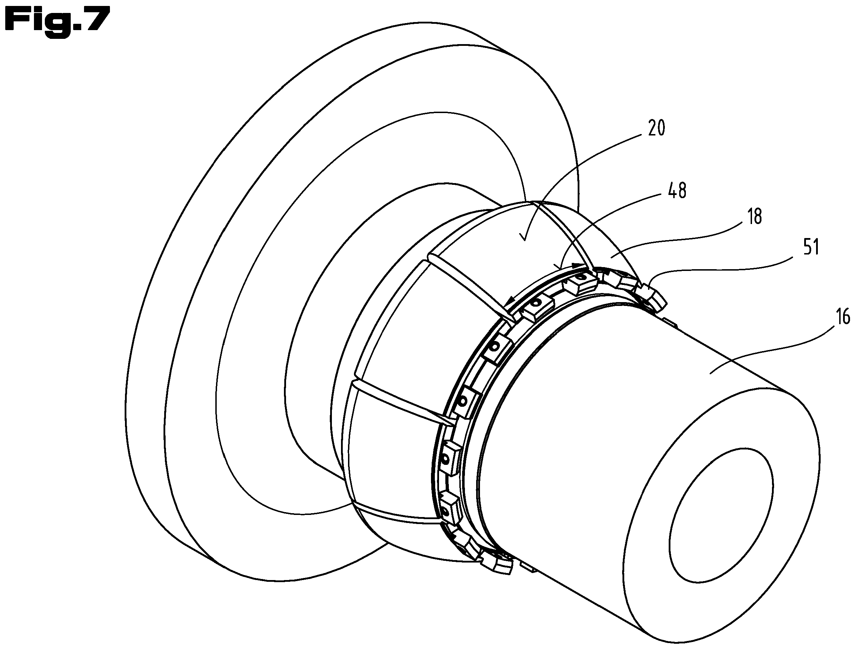

Fig. 7 zeigt die Rotorwelle 16 mit den daran angeordneten Gleitlagerpads 18 in einer perspektivischen Ansicht, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus einer Zusammenschau der Fig. 6 und 7 ersichtlich, kann vorgesehen sein, dass die Entnahmeöffnung 41 eine Umfangserstreckung 47 aufweist. Die einzelnen Gleitlagerpads 18 können eine Umfangserstreckung 48 aufweisen.

Wie besonders gut aus Fig. 5 ersichtlich, kann vorgesehen sein, dass eine Wellenmutter 49 ausgebildet ist, welche auf die Rotorwelle 16 aufgeschraubt sein kann. An der Wellenmutter 49 kann eine Axialsicherungselementaufnahme 50 ausgebildet sein, welche zur Aufnahme von einzelnen Axialsicherungselementen 51 dient. Insbesondere kann vorgesehen sein, dass die Axialsicherungselementaufnahme 50 eine Gewindebohrung umfasst, wobei die einzelnen Axialsicherungselemente 51 mittels einer Befestigungsschraube 52 in Radialrichtung in die Gewindebohrung eingeschraubt werden können.

Weiters kann vorgesehen sein, dass die Axialsicherungselemente 51 an einer Axialstirnseite 53 eine Keilfläche 54 aufweisen. An der ersten Stirnseite 23 des Gleitlagerpads 18 kann eine erste Gegenkeilfläche 55 ausgebildet sein. Insbesondere kann vorgesehen sein, dass die Keilfläche 54 mit der ersten Gegenkeilfläche 55 zusammenwirkt bzw. an dieser anliegt.

Wie aus Fig. 5 weiters ersichtlich, kann vorgesehen sein, dass ein Axialanschlagring 56 ausgebildet ist, welcher zusammen mit dem Axialsicherungselement 51 zum Klemmen des Gleitlagerpads 18 dient. Insbesondere können die einzelnen Gleitlagerpads 18 zwischen dem Axialanschlagring 56 und dem Axialsicherungselement 51 bzw. mehreren Axialsicherungselementen 51 geklemmt werden.

Wie aus Fig. 5 ersichtlich, kann vorgesehen sein, dass der Axialanschlagring 56 eine Keilfläche 57 aufweist, welche derart ausgebildet ist, dass eine formschlüssige Verbindung zwischen dem Gleitlagerpad 18 und dem Axialanschlagring 56 erreicht werden kann.

Wie aus Fig. 5 weiters ersichtlich, kann vorgesehen sein, dass der Lagerbock 17 einen Axialanschlag 62 für das äußere Ringelement 14 aufweist. Weiters kann vorgesehen sein, dass im Axialanschlag 62 eine Ausnehmung 63 ausgebildet ist, welche mit der Entnahmeöffnung 41 korrespondiert.

Im zusammengebauten Zustand der Gleitlagerung 9 ist das äußere Ringelement 14 im Lagerbock 17 aufgenommen.

Der Axialanschlagring 56 kann an der Rotorwelle 16 befestigt sein. Weiters kann die Wellenmutter 49 auf die Rotorwelle 16 aufgeschraubt sein. Wie aus Fig. 5 ersichtlich, können einzelne Gleitlagerpads 18 zwischen dem Axialanschlagring 56 und jeweils zumindest einem Axialsicherungselement 51 geklemmt sein. Durch die Formgebung des Axialanschlagringes 56 bzw. des Axialsicherungselementes 51 können die Gleitlagerpads 18 sowohl in Axialrichtung als auch in Radialrichtung formschlüssig geklemmt mit der Rotorwelle 16 gekoppelt sein.

Zum Wechseln der einzelnen Gleitlagerpads 18 kann der Deckel 36 vom Lagerbock 17 abgenommen werden. Alternativ dazu ist es auch denkbar, dass im Deckel 36 eine Wartungsöffnung ausgebildet ist, welche vom Deckel 36 abhängbar ist, wodurch der Innenraum des Lagerbockes 17 zugänglich ist.

In einer weiteren Alternative ist es auch denkbar, dass der Deckel 36 geteilt ausgebildet ist, sodass er radial von der Rotorwelle 16 entfernt werden kann und nicht in Axialrichtung entlang der Rotorwelle 16 verschoben werden muss. Hierbei kann der Deckel 36 beispielsweise in einer Mittelebene geteilt ausgebildet sein.

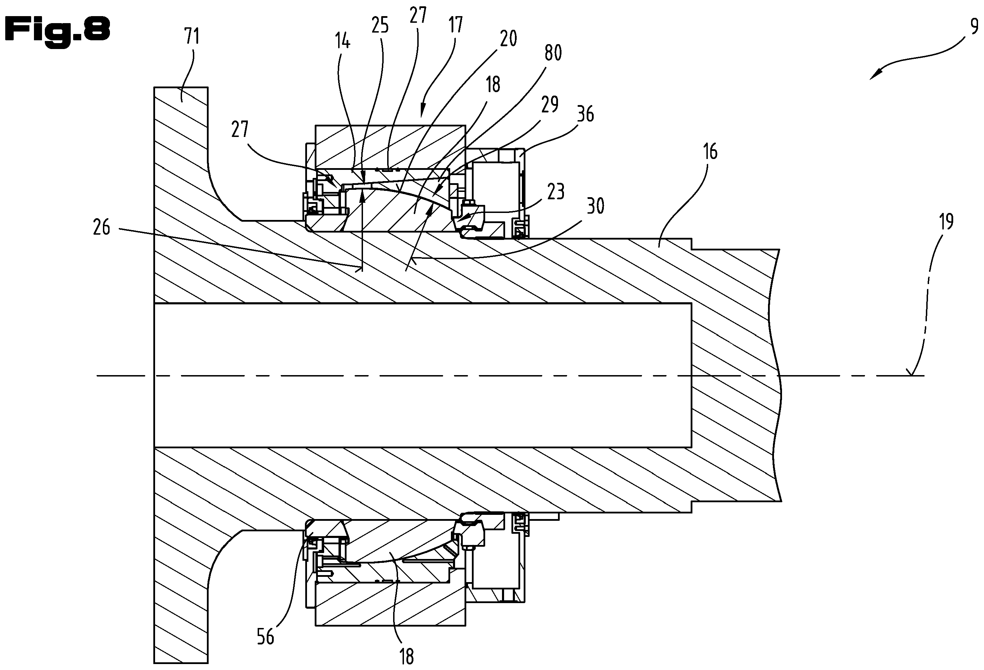

In den Figuren 8 bis 11 ist eine weitere und gegebenenfalls für sich eigenständige dritte Ausführungsform der Gleitlagerung 9 gezeigt, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

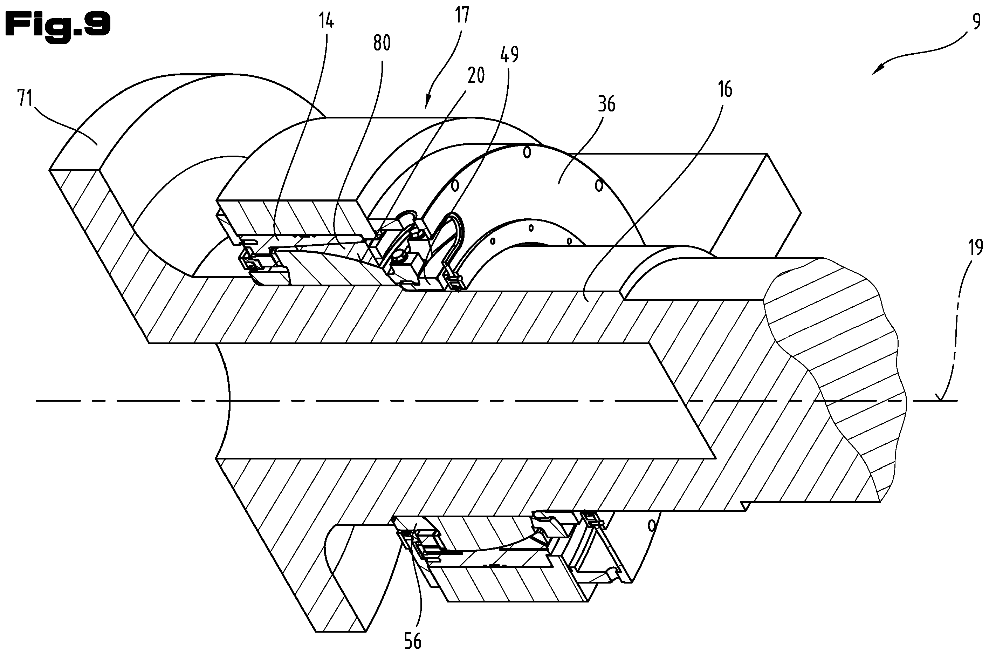

Wie aus Fig. 9 ersichtlich, kann vorgesehen sein, dass die Rotorwelle 16 einen Rotorwellenflansch 71 aufweist, welcher zum Anflanschen der Rotornabe 6 dienen kann.

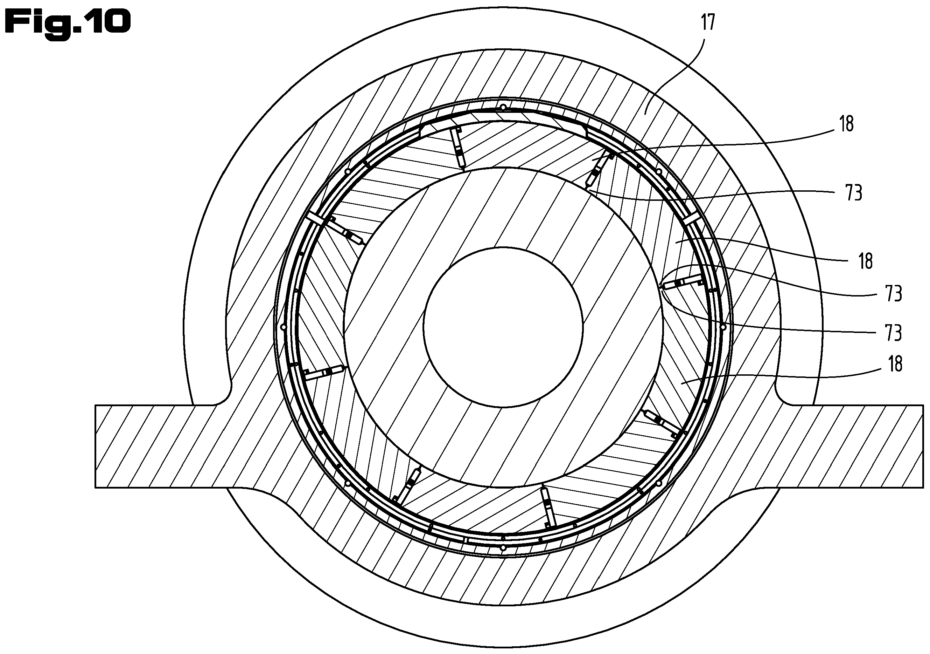

Wie aus Fig. 10 ersichtlich, kann vorgesehen sein, dass an den einzelnen Gleitlagerpads 18 Abstandhalter 73 ausgebildet sind. Die Abstandhalter 73 dienen zur richtigen Beabstandung der einzelnen Gleitlagerpads 18 zueinander in Umfangsrichtung. Insbesondere kann vorgesehen sein, dass die Abstandhalter 73 an zumindest einer der Umfangsseiten 74 des Gleitlagerpads 18 ausschließlich im Bereich der Innenseite 72 ausgebildet sind und sich nicht über die komplette Höhe der Gleitlagerpads 18 erstrecken. Weiters kann vorgesehen sein, dass an beiden Umfangsseiten 74 des Gleitlagerpads 18 die Abstandhalter 73 ausgebildet sind.

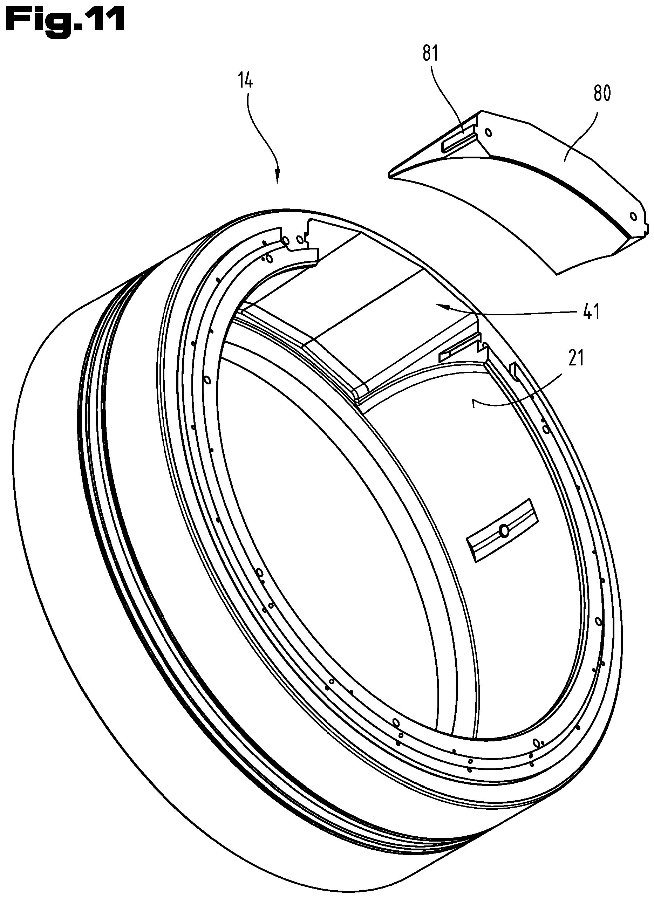

Wie besonderes gut aus Fig. 11 ersichtlich, kann vorgesehen sein, dass ein Füllelement 80 ausgebildet ist, welches zum Einsetzen in die Entnahmeöffnung 41 des äußeren Ringelementes 14 dient. Das Füllelement 80 kann im eingesetzten Zustand die Gegenfläche 21 komplettieren oder zumindest teilweise komplettieren. Dies bringt verbesserte Gleiteigenschaften mit sich.

Weiters kann vorgesehen sein, dass das Füllelement 80 mittels einer formschlüssigen Verbindung 81, insbesondere mittels einer Verbindungsnut, mit dem äußeren Ringelement 14 gekoppelt sein. Weiters kann vorgesehen sein, dass das Füllelement 80 mittels eines nicht dargestellten Sicherungselementes in seiner Position gesichert wird.

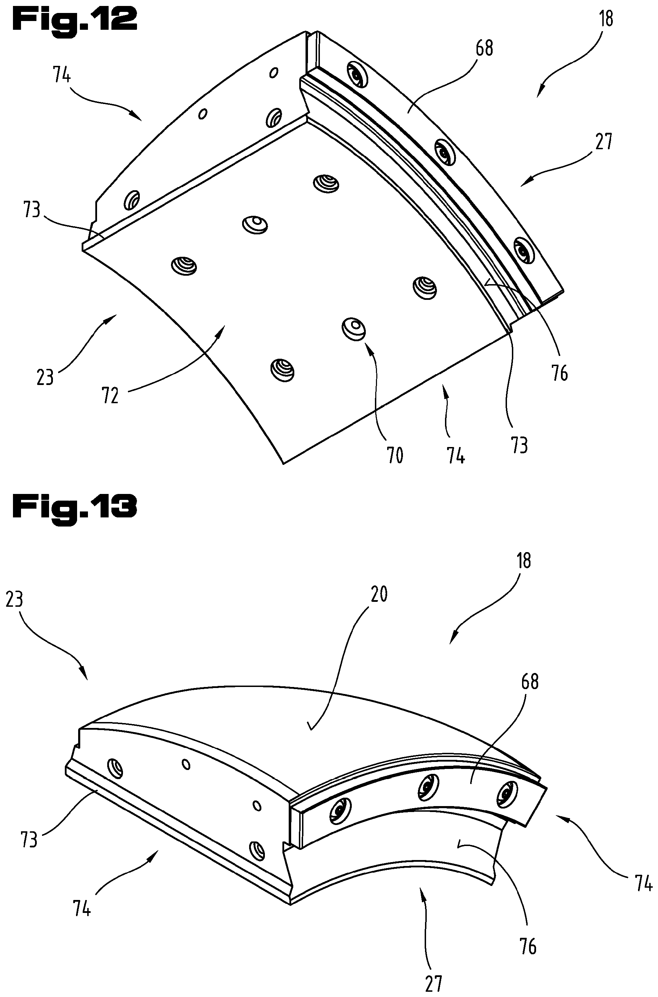

In den Figuren 12 bis 14 ist in verschiedenen perspektivischen Darstellungen eine Detailansicht des Gleitlagerpads 18 aus dem dritten Ausführungsbeispiel der Gleitlagerung 9 gezeigt, wobei wiederum für gleiche Teile gleiche Bezugszeichen bzw. Bauteilbezeichnungen wie in den vorangegangenen Figuren 1 bis 11 verwendet werden. Um unnötige Wiederholungen zu vermeiden, wird auf die detaillierte Beschreibung in den vorangegangenen Figuren 1 bis 11 hingewiesen bzw. Bezug genommen.

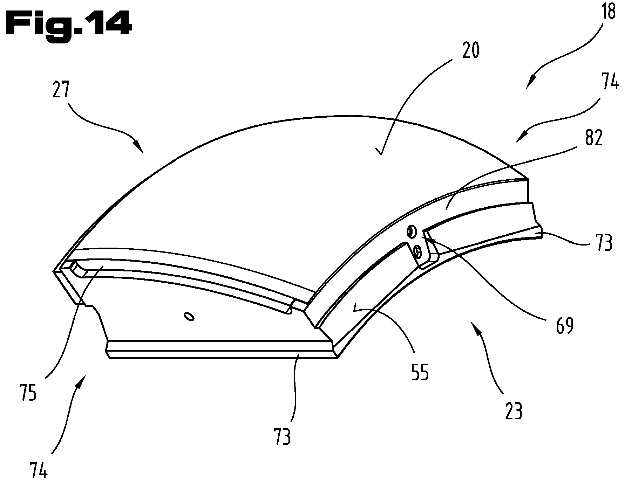

Wie aus Fig. 14 besonders gut ersichtlich, kann vorgesehen sein, dass an der Innenseite 72 des Gleitlagerpads 18 eine Aufnahme 70 zum formschlüssigen Verbinden mit einer Hebevorrichtung ausgebildet ist.

Wie aus Fig. 14 ersichtlich, kann vorgesehen sein, dass an der ersten Stirnseite 23 des Gleitlagerpads 18 ein Formelement 69, insbesondere ein Gewindeloch, ausgebildet ist, welches zur Aufnahme eines Verbindungselementes dient. Mittels des Formelementes 69 kann das Gleitlagerpad 18 mit einer Gleitlagerpadwechselvorrichtung 83 gekoppelt werden.

Weiters kann vorgesehen, dass im Bereich des Formelementes 69 eine Ausnehmung 82 ausgebildet ist, welche in Zusammenwirken mit dem Formelement 69 zur Kopplung des Gleitlagerpads 18 mit der Gleitlagerpadwechselvorrichtung 83 dient.

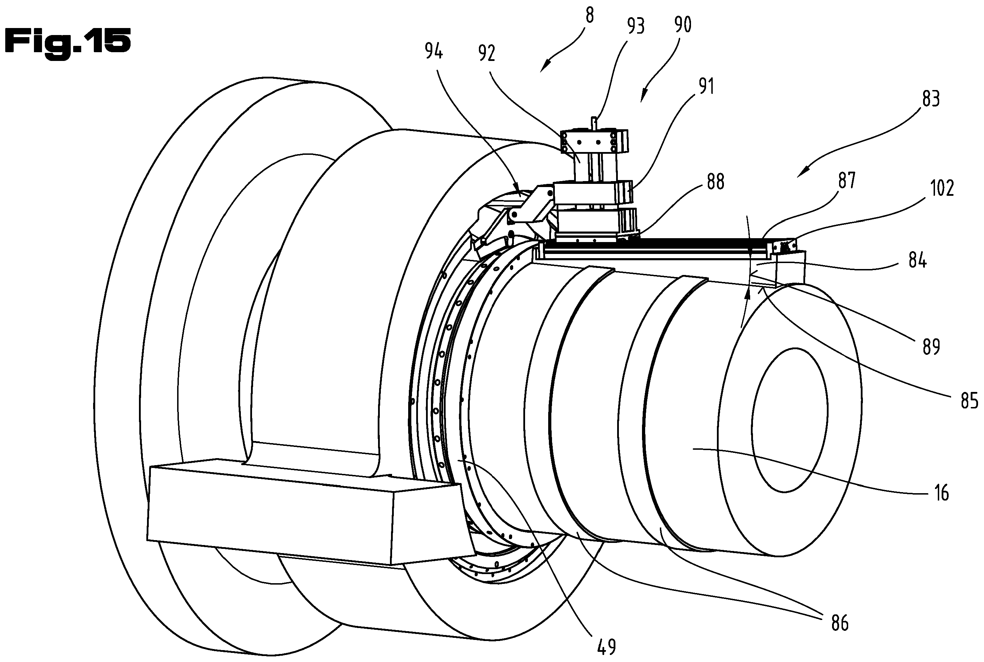

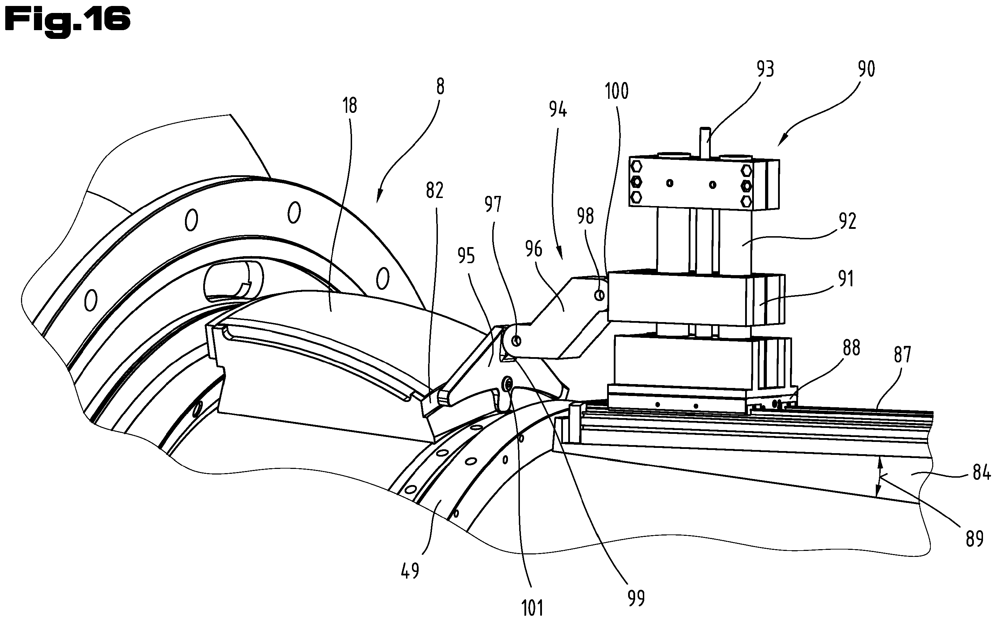

Fig. 15 und Fig. 16 zeigt in einer perspektivischen Darstellung ein erstes Ausführungsbeispiel der Gleitlagerpadwechselvorrichtung 83, welche in ihrer Wechselposition an der Rotorwelle 16 angeordnet ist, wobei wiederum für gleiche Teile gleiche Bezugszeichen bzw. Bauteilbezeichnungen wie in den vorangegangenen Figuren 1 bis 14 verwendet werden. Um unnötige Wiederholungen zu vermeiden, wird auf die detaillierte Beschreibung in den vorangegangenen Figuren 1 bis 14 hingewiesen bzw. Bezug genommen.

Wie aus Fig. 15 ersichtlich, kann vorgesehen sein, dass die Gleitlagerpadwechselvorrichtung 83 ein Grundgestell 84 aufweist, welches eine Wellenauflagefläche 85 aufweisen kann. Insbesondere kann vorgesehen sein, dass das Grundgestell 84 an dessen Wellenauflagefläche 85 an der Rotorwelle 16 aufgelegt wird. Weiters kann vorgesehen sein, dass im Grundgestell 84 Ausnehmungen ausgebildet sind, durch welche ein Befestigungselement 86, insbesondere ein Spanngurt geführt werden kann, um das Grundgestell 84 an der Rotorwelle 16 befestigen zu können.

Weiters kann vorgesehen sein, dass am Grundgestell 84 eine Linearführung 87 angeordnet ist, in welcher ein Führungsschlitten 88 längsverschiebblich geführt ist. Insbesondere kann vorgesehen sein, dass der Führungsschlitten 88 eine Kugelumlaufführung aufweist, mittels welcher er in der Linearführung 87 geführt ist.

Weiters kann vorgesehen sein, dass die Linearführung 87 in einem Winkel 89 zur Wellenauflagefläche 85 angeordnet ist. Der Winkel 89 kann zwischen 0,1° und 45°, insbesondere zwischen 1° und 30°, bevorzugt zwischen 5° und 15° betragen.

Weiters kann vorgesehen sein, dass am Führungsschlitten 88 eine Hubvorrichtung 90 ausgebildet ist, welche einen Hubschlitten 91 aufweist. Mittels einer Hubführung 92 kann der Hubschlitten 91 relativ zum Führungsschlitten 88 verschiebbar ausgebildet sein. Weiters kann eine Hubspindel 93 ausgebildet sein, mittels welcher der Hubschlitten 91 verschiebbar ist. Insbesondere kann vorgesehen sein, dass die Hubspindel 93 mit einem Akkuschrauber gekoppelt werden kann und von diesem angetrieben werden kann.

Wie besonders gut aus Fig. 16 ersichtlich, kann vorgesehen sein, dass ein Manipulationsarm 94 mit dem Hubschlitten 91 gekoppelt ist. Insbesondere kann vorgesehen sein, dass der Manipulationsarm 94 ein erstes Manipulationsarmteil 95 und ein zweites Manipulationsarmteil 96 aufweist. Das erste Manipulationsarmteil 95 kann zum Koppeln mit dem Gleitlagerpad 18 ausgebildet sein. Insbesondere kann vorgesehen sein, dass das erste Manipulationsarmteil 95 und das zweite Manipulationsarmteil 96 mittels eines ersten Drehgelenkes 97 miteinander gekoppelt sind. Weiters kann vorgesehen sein, dass das zweite Manipulationsarmteil 96 mittels eines zweiten Drehgelenkes 98 mit dem Hubschlitten 91 der Hubvorrichtung 90 gekoppelt ist.

Weiters kann vorgesehen sein, dass im Bereich des ersten Drehgelenkes 97 ein erster Drehwinkelbegrenzer 99 ausgebildet ist, welcher zur Begrenzung eines Drehwinkels zwischen des ersten Manipulationsarmteils 95 und des zweiten Manipulationsarmteils 96 dient. Weiters kann vorgesehen sein, dass im Bereich des zweiten Drehgelenkes 98 ein zweiter Drehwinkelbegrenzer 100 ausgebildet ist, welcher zur Begrenzung des Drehwinkels zwischen dem zweiten Manipulationsarmteils 96 und dem Hubschlitten 91 dient.

Wie aus Fig. 16 weiters ersichtlich, kann vorgesehen sein, dass das Gleitlagerpads 18 mittels eines Verbindungselementes 101 mit dem ersten Manipulationsarmteil 95 des Manipulationsarmes 94 gekoppelt werden. Das Verbindungselement 101 kann beispielsweise in Form einer Befestigungsschraube ausgebildet sein. Weiters kann vorgesehen sein, dass das erste Manipulationsarmteil 95 an die Formgebung der Ausnehmung 82 des Gleitlagerpads 18 angepasst ist, sodass eine formschlüssige Verbindung zwischen dem Gleitlagerpad 18 und dem ersten Manipulationsarmteils 95 hergestellt werden kann.

Wie weiter aus Fig. 15 ersichtlich, kann vorgesehen sein, dass eine Stellspindel 102 ausgebildet ist, mittels welcher der Führungsschlitten 88 an der Linearführung 87 verschiebbar ist. Weiters kann vorgesehen sein, dass die Stellspindel mit einem Wellenstummel gekoppelt ist, wobei der Wellenstummel derart ausgebildet ist, dass er mit einem Akkuschrauber koppelbar ist.

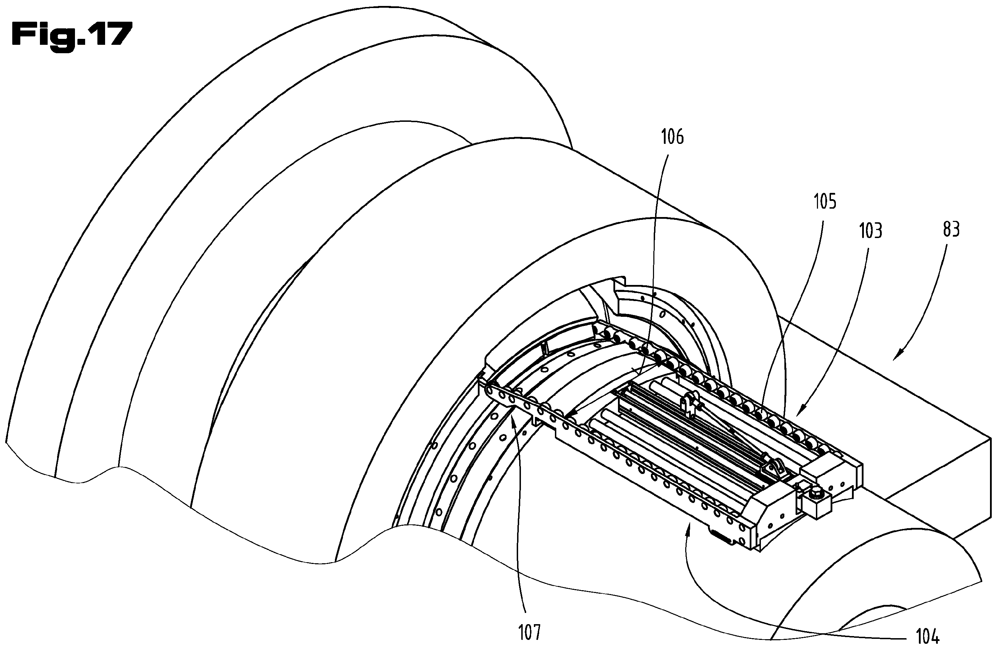

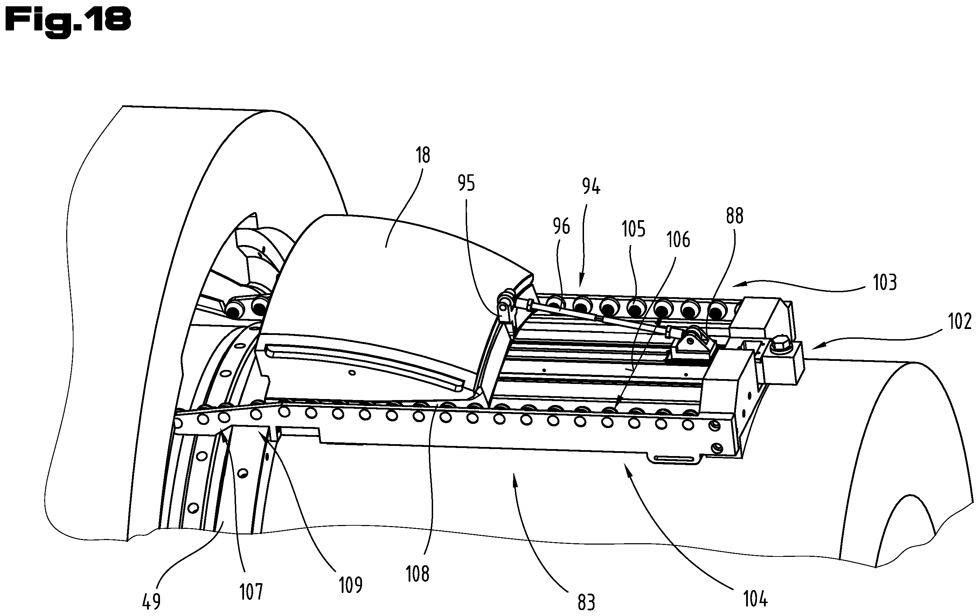

In den Fig. 17 und 18 ist ein zweites Ausführungsbeispiel der Gleitlagerpadwechselvorrichtung 83 dargestellt, wobei wiederum für gleiche Teile gleiche Bezugszeichen bzw. Bauteilbezeichnungen wie in den vorangegangenen Figuren 1 bis 16 verwendet werden. Um unnötige Wiederholungen zu vermeiden, wird auf die detaillierte Beschreibung in den vorangegangenen Figuren 1 bis 16 hingewiesen bzw. Bezug genommen.

Wie aus den Fig. 17 und 18 ersichtlich, kann vorgesehen sein, dass die Gleitlagerpadwechselvorrichtung 83 eine erste Rollenbahn 103 und eine zweite Rollenbahn 104 umfasst, wobei an der Rollenbahn 103, 104 jeweils mehrere Auflagerollen 105 angeordnet sind. Weiters kann vorgesehen sein, dass am Gleitlagerpad 18 eine Auflageausnehmung 108 ausgebildet ist bzw. zwei Auflageausnehmungen 108 ausgebildet sind, welche jeweils zur Auflage auf den Auflagerollen 105 der ersten Rollenbahn 103 und der zweiten Rollenbahn 104 dienen.

Wie besonders gut aus Fig. 18 ersichtlich, kann vorgesehen sein, dass die erste Rollenbahn 103 und die zweite Rollenbahn 104 in einem Abstand 106 zueinander angeordnet sind, sodass das Gleitlagerpad 18 stabil an der ersten Rollenbahn 103 und an der zweiten Rollenbahn 104 aufliegen kann.

Wie aus den Fig. 17 und 18 weiters ersichtlich, kann in diesem Ausführungsbeispiel ebenfalls ein Manipulationsarm 94 vorgesehen sein, welcher ein erstes Manipulationsarmteil 95 und ein zweites Manipulationsarmteil 96 aufweist, wobei das erste Manipulationsarmteil 95 zur Kopplung mit dem Gleitlagerpad ausgebildet ist. Das zweite Manipulationsarmteil 96 kann mit dem Führungsschlitten 88 gekoppelt sein.

Wie aus Fig. 18 weiters ersichtlich, kann vorgesehen sein, dass die erste Rollenbahn 103 und die zweite Rollenbahn 104 an einem vorderen Ende 107 nach unten gekröpft sind. Insbesondere können hierbei die Auflagerollen 105 in einem Hauptteil der ersten Rollenbahn 103 und der zweiten Rollenbahn 104 in eine Ebene angeordnet sein und im Bereich des vorderen Endes 107 in einer weiteren Ebene angeordnet sein, welche zur ersten Ebene winkelig verkippt ausgebildet ist.

Weiters kann vorgesehen sein, dass im Bereich des vorderen Endes 107 eine Ausnehmung 109 ausgebildet ist, welche mit der Form der Wellenmutter 49 korrespondieren kann, sodass die erste Rollenbahn 103 und die zweite Rollenbahn 104 derart über der Wellenmutter 49 platziert werden können, dass das auszutauschende Gleitlagerpad 18 direkt von seinem Sitz in der Gleitlagerung 9 herausgezogen werden kann.

Untenstehend wird der Vorgang zum Wechseln von einzelnen Gleitlagerpads 18 beschrieben, wobei der eigentliche Wechselvorgang anhand des ersten Ausführungsbeispiels der Gleitlagerpadwechselvorrichtung 83 und anhand des zweiten Ausführungsbeispiels der Gleitlagerpadwechselvorrichtung 83 gesondert beschrieben werden. Die vorbereitenden Arbeiten zum Wechseln von einzelnen Gleitlagerpads 18 sind für beide Ausführungsbeispiele gleich und werden daher gemeinsam beschrieben.

Zum Freilegen der Gleitlagerpads 18 kann der Deckel 36 demontiert werden bzw. eine Ausnehmung im Deckel 36 geöffnet werden, sodass die Gleitlagerpads 18 axial zugänglich sind. Anschließend kann jeweils das zu wechselnde Gleitlagerpad 18 in den Bereich der Entnahmeöffnung 41 verdreht werden. Anschließend kann das Axialsicherungselement 51 des zu wechselnden Gleitlagerpads 18 gelöst werden und entfernt werden. Dadurch ist das zu wechselnde Gleitlagerpad 18 nicht mehr an der Rotorwelle 16 geklemmt.

In einem weiteren Verfahrensschritt kann das zu wechselnde Gleitlagerpad 18 axial bzw. optional gleichzeitig auch radial nach außen durch die Entnahmeöffnung 41 hindurch verschoben werden, um das Gleitlagerpad 18 aus dem Inneren des Lagerbockes 17 zu entfernen. In einem weiteren Verfahrensschritt kann ein neues Gleitlagerpad 18 in umgekehrter Reihenfolge wieder in das Innere des Lagerbockes 17 eingesetzt werden bzw. mit dem Axialsicherungselement 51 geklemmt werden. Dieser Vorgang kann für alle zu wechselnden Gleitlagerpads 18 wiederholt werden.

Anschließend kann das Innere des Lagerbockes 17 wieder mittels des Deckels 36 verschlossen werden und so die Gleitlagerung 9 wieder betriebsbereit gemacht werden.

Beim eigentlichen Wechselvorgang der Gleitlagerpads 18 mit dem ersten Ausführungsbeispiel der Gleitlagerpadwechselvorrichtung 83 kann diese in ihre dafür vorgesehene Position verbracht werden und an der Rotorwelle 16 bzw. an der Wellenmutter 49 befestigt werden. Anschließend kann das erste Manipulationsarmteil 95 mittels des Verbindungselementes 101 mit dem zu wechselnden Gleitlagerpad 18 gekoppelt werden.

Anschließend kann der Führungsschlitten 88 in Axialrichtung entlang der Linearführung 87 bewegt werden, sodass das Gleitlagerpad axial aus seiner Position herausgezogen werden kann.

Anschließend bzw. parallel dazu kann der Hubschlitten 91 angehoben werden, sodass das Gleitlagerpad 18 über die Wellenmutter 49 gehoben werden kann. Anschließend kann der Führungsschlitten 88 weiter axial verschoben werden, sodass das Gleitlagerpad 18 vollständig aus der Gleitlagerung 9 entfernt werden kann.

Beim Anheben des Gleitlagerpads 18 kann durch den ersten Drehwinkelbegrenzer 99 bzw. durch den zweiten Drehwinkelbegrenzer 100 erreicht werden, dass trotz außermittiger Aufnahme des Gleitlagerpads und somit der Kippmomenteinleitung das Gleitlagerpad 18 in annähernd horizontaler Ausrichtung bzw. geringfügig verkippt vollständig angehoben werden kann.

Mit einer Gleitlagerpadwechselvorrichtung 83 entsprechend dem zweiten Ausführungsbeispiel erfolgt der Gleitlagerpadwechsel wie folgt. Das erste Manipulationsarmteil 95 wird mit dem zu wechselnden Gleitlagerpad 18 gekoppelt. Anschließend wird durch Verschiebung des Führungsschlittens 88 an der Linearführung 87, das zu wechselnde Gleitlagerpad 18 in Axialrichtung aus seiner Position herausgezogen.

Hierbei kommt die Auflageausnehmung 108 an den Auflagerollen 105 zuerst im Bereich des vorderen Endes 107 der ersten Rollenbahn 103 bzw. der zweiten Rollenbahn 104 zur Auflage. In weiterer Folge gleitet das Gleitlagerpad 18 an den Auflagerollen 105 unter weiterer Zugbewegung mittels des Manipulationsarmes 94 bzw. mittels des Führungsschlittens 88 aus seiner Gleitlagerposition heraus.

Für beide Ausführungsvarianten der Gleitlagerpadwechselvorrichtung 83 erfolgt das Einsetzen eines neuen Gleitlagerpads in umgekehrter Reihenfolge.

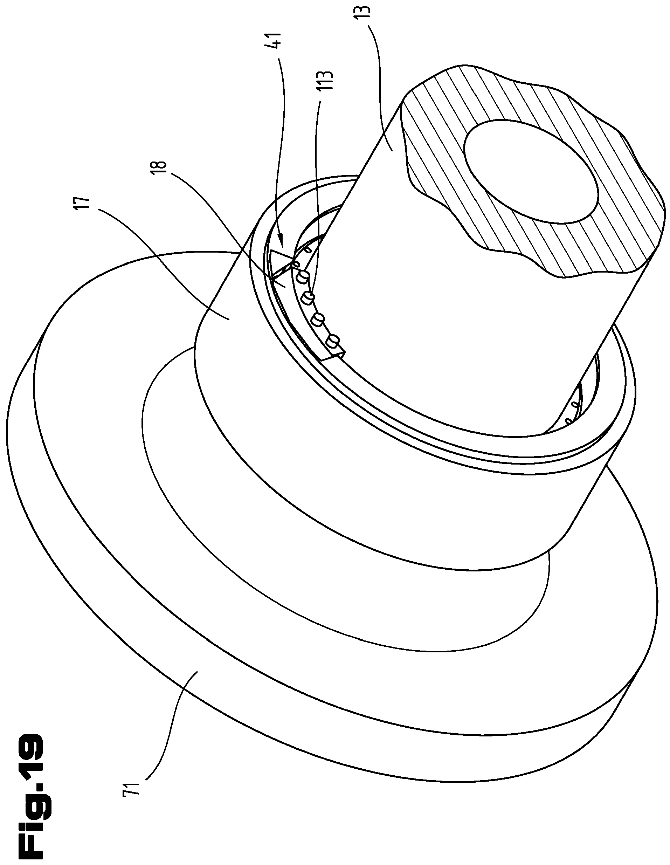

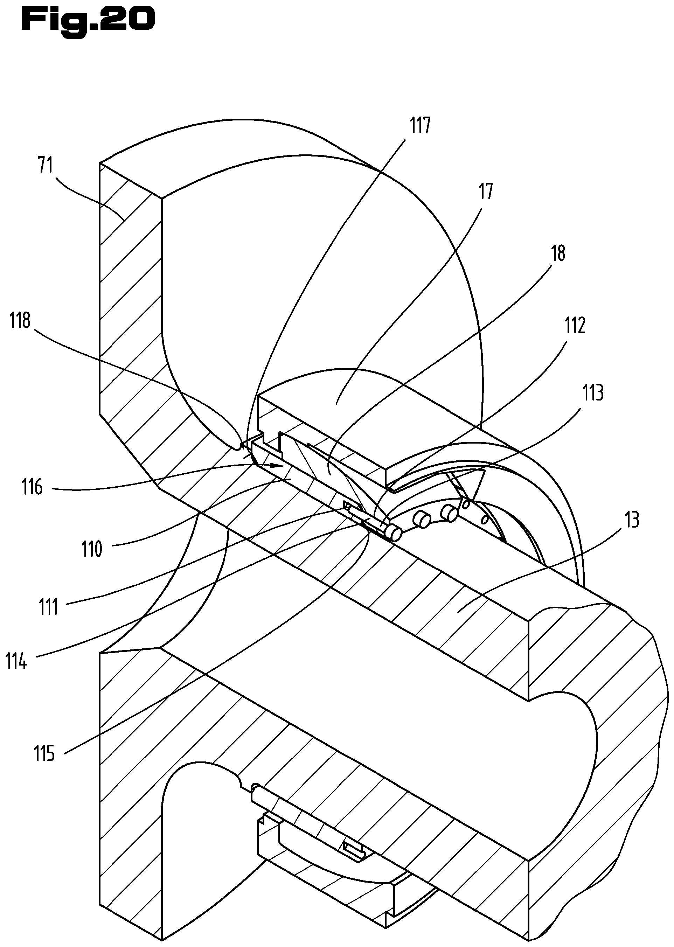

In den Figuren 19 und 20 ist eine weitere und gegebenenfalls für sich eigenständige vierte Ausführungsform der Gleitlagerung 9 gezeigt, wobei wiederum für gleiche Teile gleiche Bezugszeichen bzw. Bauteilbezeichnungen wie in den vorangegangenen Figuren 1 bis 16 verwendet werden. Um unnötige Wiederholungen zu vermeiden, wird auf die detaillierte Beschreibung in den vorangegangenen Figuren 1 bis 18 hingewiesen bzw. Bezug genommen.

In den Figuren 19 und 20 ist der Einfachheit halber nur ein einzelnes Gleitlagerpad 18 dargestellt, wobei jedoch, wie in den vorherigen Ausführungsbeispielen auch, mehrere der Gleitlagerpads 18 gleichmäßig über den Umfang verteilt angeordnet sein können.

Wie aus Fig. 20 ersichtlich, kann vorgesehen sein, dass am inneren Ringelement 13 ein Gleitlagerpadaufnahmering 110 angeordnet ist, welcher zur Aufnahme der einzelnen Gleitlagerpads 18 dient.

Insbesondere kann vorgesehen sein, dass die einzelnen Gleitlagerpads 18 an deren Innenseite 72 einen Absatz 114 aufweisen. Der Absatz 114 kann eine Anlagefläche ausbilden, sodass das Gleitlagerpad 18 im Bereich des Absatzes 114 an einer ersten Stirnseite 115 des Gleitlagerpadaufnahmeringes 110 anliegen kann. Dadurch kann das Gleitlagerpad 18 in Axialrichtung relativ zum Gleitlagerpadaufnahmering 110 positioniert werden.

Weiters kann vorgesehen sein, dass der Absatz 114 eine Ausnehmung 116 begrenzt, welche an der Innenseite 72 des Gleitlagerpads 18 ausgebildet ist. Die Ausnehmung 116 kann sich ausgehend von der zweiten Stirnseite 27 des Gleitlagerpads 18 bis zum Absatz 114 erstrecken. Die Ausnehmung 116 bzw. der Absatz 114 können rotationssymmetrisch ausgebildet sein.

Insbesondere kann vorgesehen sein, dass im verbauten Zustand des Gleitlagerpads 18 der Gleitlagerpadaufnahmering 110 zumindest teilweise in der Ausnehmung 116 des Gleitlagerpads 18 aufgenommen ist.

Weiters kann vorgesehen sein, dass an der ersten Stirnseite 115 des Gleitlagerpadaufnahmeringes 110 mehrere Gewindebohrungen 111 ausgebildet sind. Mit den Gewindebohrungen 111 korrespondierend können in den Gleitlagerpads 18 jeweils eine, insbesondere mehrere Durchgangslöcher 112 ausgebildet sein.

Weiters können durch die Durchgangslöcher 112 Befestigungsschrauben 113 geführt sein, welche in die Gewindebohrungen 111 eingeschraubt sein können und somit zur Befestigung der Gleitlagerpads 18 am Gleitlagerpadaufnahmering 110 dienen können.

Wie aus Fig. 20 weiters ersichtlich, kann vorgesehen sein, dass eine zweite Stirnseite 117 des Gleitlagerpadaufnahmeringes 110 an einem Wellenwulst 118 anliegt. Dadurch kann der Gleitlagerpadaufnahmering 110 axial an dem inneren Ringelement 13 positioniert sein.

Beim Ausführungsbeispiel nach Fig. 19 und Fig. 20 können anstatt des Lösens des Axialsicherungselementes 51 des zu wechselnden Gleitlagerpads 18 folgende Verfahrensschritte durchgeführt werden.

Die einzelnen Befestigungsschrauben 113 des zu wechselnden Gleitlagerpads können gelöst und entfernt werden. Dadurch ist das zu wechselnde Gleitlagerpad 18 nicht mehr am Gleitlagerpadaufnahmering 110 geklemmt.

In einem weiteren Verfahrensschritt kann das zu wechselnde Gleitlagerpad 18 axial bzw. optional gleichzeitig auch radial nach außen durch die Entnahmeöffnung 41 hindurch verschoben werden, um das Gleitlagerpad 18 aus dem Inneren des Lagerbockes 17 zu entfernen. In einem weiteren Verfahrensschritt kann ein neues Gleitlagerpad 18 in umgekehrter Reihenfolge wieder in das Innere des Lagerbockes 17 eingesetzt werden bzw. mit den Befestigungsschrauben 113 am Gleitlagerpadaufnahmering 110 befestigt werden. Dieser Vorgang kann für alle zu wechselnden Gleitlagerpads 18 wiederholt werden.

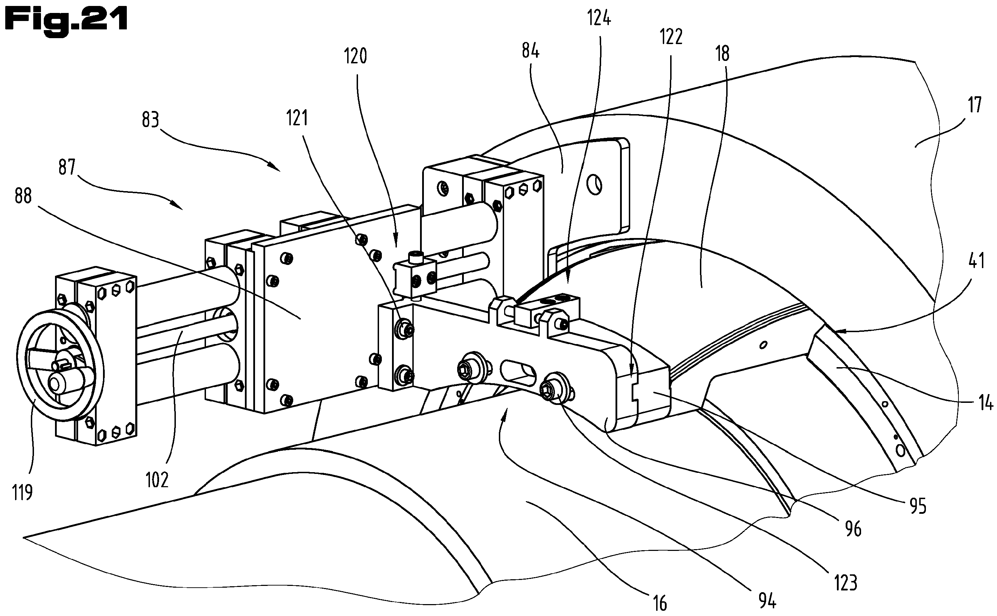

In der Fig. 21 ist ein drittes Ausführungsbeispiel der Gleitlagerpadwechselvorrichtung 83 dargestellt, wobei wiederum für gleiche Teile gleiche Bezugszeichen bzw. Bauteilbezeichnungen wie in den vorangegangenen Figuren 1 bis 20 verwendet werden. Um unnötige Wiederholungen zu vermeiden, wird auf die detaillierte Beschreibung in den vorangegangenen Figuren 1 bis 20 hingewiesen bzw. Bezug genommen.

Das dritte Ausführungsbeispiel der Gleitlagerpadwechselvorrichtung 83 kann insbesondere zum Wechseln von Gleitlagerpads 18 bei einer Gleitlagerpadanordnung, wie sie in den Figuren 19 und 20 vorgesehen ist, eingesetzt werden.

Wie aus Fig. 21 ersichtlich, kann vorgesehen sein, dass die Gleitlagerpadwechselvorrichtung 83 ein Grundgestell 84 aufweist, welches zum Koppeln mit dem Lagerbock 17 ausgebildet ist. Insbesondere kann vorgesehen sein, dass das Grundgestell 84 mittels Befestigungsschrauben in Gewindebohrungen des Lagerbockes 17 verschraubt werden kann. Die Gewindebohrungen im Lagerbock 17 können beispielsweise zur Aufnahme bzw. zum Befestigen eines Lagerdeckels dienen.

Weiters kann vorgesehen sein, dass am Grundgestell 84 eine Linearführung 87 in Form von Führungsstangen befestigt ist und dass der Führungsschlitten 88 an den Führungsstangen geführt ist. Weiters kann vorgesehen sein, dass die Stellspindel 102 zum Verschieben des Führungsschlittens 88 relativ zum Grundgestell 84 ausgebildet ist und mit einem Handrad 119 zum Einleiten einer Drehbewegung gekoppelt ist.

Wie aus Fig. 21 weiters ersichtlich, kann vorgesehen sein, dass der Manipulationsarm 94 mittels Manipulationsarmbefestigungsmittel 121, insbesondere mittels Schrauben, mit dem Führungsschlitten 88 gekoppelt ist. Weiters kann vorgesehen sein, dass zwischen dem Führungsschlitten 88 und dem Manipulationsarm 94 eine Radialverstelleinheit 120 ausgebildet ist, welche zum Verschieben des Manipulationsarmes 94 in Radialrichtung relativ zum Führungsschlitten 88 dient. Die Radialverstelleinheit 120 kann beispielsweise eine Stellschraube aufweisen, welche mit dem Manipulationsarm 94 gekoppelt ist. Zur Verstellbarkeit des Manipulationsarmes 94 relativ zum Führungsschlitten 88 kann vorgesehen sein, dass die Manipulationsarmbefestigungsmittel 121 in einer Langlochführung geführt sind.

Wie aus Fig. 21 weiters ersichtlich, kann vorgesehen sein, dass der Manipulationsarm 94 ein erstes Manipulationsarmteil 95 und ein zweites Manipulationsarmteil 96 aufweist, wobei das erste Manipulationsarmteil 95 zum Koppeln mit dem Gleitlagerpad 18 ausgebildet ist.

Insbesondere kann vorgesehen sein, dass zwischen dem ersten Manipulationsarmteil 95 und dem zweiten Manipulationsarmteil 96 eine Führungsnut 122 ausgebildet ist. Hierbei kann vorgesehen sein, dass das erste Manipulationsarmteil 95 in einer Führungsnut 122 des zweiten Manipulationsarmteils 96 geführt ist, wobei das erste Manipulationsarmteil 95 und das zweite Manipulationsarmteil 96 relativ zueinander verschiebbar sein können. Das erste Manipulationsarmteil 95 und das zweite Manipulationsarmteil 96 können mittels eines Manipulationsarmteilbefestigungsmittels 123 miteinander gekoppelt sein.

Wie aus Fig. 21 ersichtlich, kann das Manipulationsarmteilbefestigungsmittel 123 in Form einer Schraube ausgebildet sein. Weiters kann vorgesehen sein, dass eine Umfangsverstelleinheit 124 ausgebildet ist, mittels welcher das erste Manipulationsarmteil 95 relativ zum zweiten Manipulationsarmteil 96 in Umfangsrichtung verschoben werden kann. Hierbei können die Manipulationsarmteilbefestigungsmittel 123 in einer Langlochaufnahme im zweiten Manipulationsarmteil 96 aufgenommen sein. Die Umfangsverstelleinheit 124 kann ebenfalls eine Stellschraube umfassen.

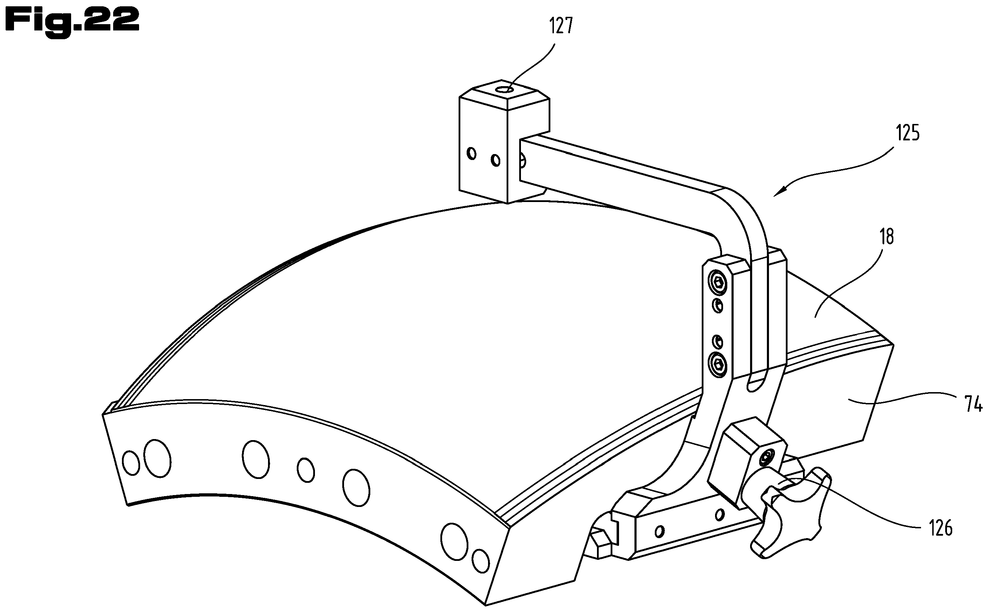

Fig. 22 zeigt ein erstes Ausführungsbeispiel eines Hebearmes 125 zum Entfernen des Gleitlagerpads 18 von der Gleitlagerpadwechselvorrichtung 83 bzw. zum Einsetzen eines neuen Gleitlagerpads 18 in die Gleitlagerpadwechselvorrichtung 83. Wie aus Fig. 22 ersichtlich, kann vorgesehen sein, dass der Hebearm 125 mittels einer Befestigungsschraube 126 an einer Umfangsseite 74 des Gleitlagerpads 18 befestigt ist. Der Hebearm 125 kann eine Hebeaufnahme 127 aufweisen, an welcher der Hebearm 125 mit einem Hebemittel, wie etwa einem Kran gekoppelt sein kann.

Weiters kann vorgesehen sein, dass die Hebeaufnahme 127 relativ zur Hebearmbefestigungsschraube 126 verstellbar ist, sodass der Hebearm 125 derart konfiguriert werden kann, dass die Hebeaufnahme 127 durch den Massenschwerpunkt des Hebearmes 125 zusammen mit dem Gleitlagerpad 18 verläuft, wenn das Gleitlagerpad 18 horizontal ausgerichtet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern der Schutzbereich durch die Ansprüche bestimmt ist.

**Bezugszeichenaufstellung**

| | | | |
|---|---|---|---|
| 1 | Windkraftanlage | 30 | Kugelkalottenradius |
| | | 31 | |
| 2 | Gondel | 32 | |
| 3 | Turm | 33 | Abstand |
| 4 | Gondelgehäuse | 34 | Axialerstreckung Gleitlagerpad |
| 5 | Rotor | 35 | Axialstirnseite Lagerbock |
| 6 | Rotornabe | 36 | Deckel |
| 7 | Rotorblatt | 37 | Schmierölreservoir |
| 8 | Rotorlagerung | 38 | Schmieröl |
| 9 | Gleitlagerung | 39 | Durchgangsöffnung |
| 10 | Radialkraft | 40 | |
| 11 | Axialkraft | 41 | Entnahmeöffnung |
| 12 | Kippmoment | 42 | erste Stirnseite äußeres Ringelement |
| 13 | inneres Ringelement | | |
| 14 | äußeres Ringelement | 43 | zweite Stirnseite äußeres Ringelement |
| 15 | Gleitlagerelement | | |
| 16 | Rotorwelle | 44 | |
| 17 | Lagerbock | 45 | erster Entnahmeöffnungsbereich |
| 18 | Gleitlagerpad | 46 | zweiter Entnahmeöffnungsbereich |
| 19 | Rotationsachse | 47 | Umfangserstreckung Entnahmeöffnung |
| 20 | Lagerfläche | | |
| 21 | Gegenfläche | 48 | Umfangserstreckung Gleitlagerpad |
| 22 | Innenseite | | |
| 23 | erste Stirnseite | 49 | Wellenmutter |
| 24 | erster Durchmesser | 50 | Axialsicherungselement-aufnahme |
| 25 | Scheitelpunkt | | |
| 26 | Durchmesser Scheitelpunkt | 51 | Axialsicherungselement |
| 27 | zweite Stirnseite | 52 | Befestigungsschraube |
| 28 | zweiter Durchmesser | 53 | Axialstirnseite Axialsicherungselement |
| 29 | Kugelkalottenabschnitt | | |
| 54 | Keilfläche Axialsicherungselement | 86 | Befestigungselement |
| | | 87 | Linearführung |
| 55 | erste Gegenkeilfläche | 88 | Führungsschlitten |
| 56 | Axialanschlagring | 89 | Winkel |
| 57 | Keilfläche Axialanschlagring | 90 | Hubvorrichtung |
| 58 | | 91 | Hubschlitten |
| 59 | | 92 | Hubführung |
| 60 | | 93 | Hubspindel |
| 61 | | 94 | Manipulationsarm |
| 62 | Axialanschlag | 95 | erstes Manipulationsarmteil |
| 63 | Ausnehmung | 96 | zweites Manipulationsarmteil |
| 64 | | 97 | erstes Drehgelenk |
| 65 | | 98 | zweites Drehgelenk |
| 66 | | 99 | erster Drehwinkelbegrenzer |
| 67 | | 100 | zweiter Drehwinkelbegrenzer |
| 68 | Anlaufringsegment | 101 | Verbindungselement |
| 69 | Formelement Gleitlagerpad | 102 | Stellspindel |
| 70 | Aufnahme für Hebevorrichtung | 103 | erste Rollenbahn |
| 71 | Rotorwellenflansch | 104 | zweite Rollenbahn |
| 72 | Innenseite | 105 | Auflagerolle |
| 73 | Abstandhalter | 106 | Abstand erste Rollenbahn - zweite Rollenbahn |
| 74 | Umfangsseite | | |
| 75 | Schmieröltransportnut | 107 | vorderes Ende |
| 76 | zweite Gegenkeilfläche | 108 | Auflageausnehmung |
| 77 | | 109 | Ausnehmung |
| 78 | | 110 | Gleitlagerpadaufnahmering |
| 79 | | 111 | Gewindebohrung |
| 80 | Füllelement | 112 | Durchgangsloch |
| 81 | formschlüssige Verbindung | 113 | Befestigungsschraube |
| 82 | Ausnehmung | 114 | Absatz |
| 83 | Gleitlagerpadwechselvorrichtung | 115 | erste Stirnseite Gleitlagerpadaufnahmering |
| 84 | Grundgestell | | |
| 85 | Wellenauflagefläche | 116 | Ausnehmung |
| 117 | zweite Stirnseite Gleitlagerpadaufnahmering | | |
| 118 | Wellenwulst | | |
| 119 | Handrad | | |
| 120 | Radialverstelleinheit | | |
| 121 | Manipulationsarmbefestigungsmittel | | |
| 122 | Führungsnut | | |
| 123 | Manipulationsarmteilbefestigungsmittel | | |
| 124 | Umfangsverstelleinheit | | |
| 125 | Hebearm | | |
| 126 | Hebearmbefestigungsschraube | | |
| 127 | Hebeaufnahme | | |

## Patentansprüche

1. Verfahren zum Wechseln von an einer Rotorwelle (16) einer Rotorlagerung (8) einer Windkraftanlage (1) angeordneten Gleitlagerpads (18), umfassend die Verfahrensschritte:
- Bewegen des zu wechselnden Gleitlagerpads (18) zu einer Entnahmeöffnung (41) durch Drehung der Rotorwelle (16);
- Lösen eines Axialsicherungselementes (51) oder von Befestigungsschrauben (113) des zu wechselnden Gleitlagerpads (18);
- Axiales Entfernen des zu wechselnden Gleitlagerpads (18) durch die Entnahmeöffnung (41);
- Axiales Einsetzen eines neuen Gleitlagerpads (18) durch die Entnahmeöffnung (41);
- Fixieren des neuen Gleitlagerpads (18) mittels des Axialsicherungselementes (51) oder mittels der Befestigungsschrauben (113),
**dadurch gekennzeichnet, dass** zum axialen Entfernen des zu wechselnden Gleitlagerpads (18) und zum axialen Einsetzen eines neuen Gleitlagerpads (18) eine Gleitlagerpadwechselvorrichtung (83) mit einem Manipulationsarm (94) verwendet wird, wobei der Manipulationsarm (94) zum Koppeln mit dem Gleitlagerpad (18) ausgebildet ist.

2. Verfahren nach Anspruch 1, **dadurch gekennzeichnet, dass** der Manipulationsarm (94) mittels eines Verbindungselementes (101), insbesondere mittels einer Schraube, mit dem Gleitlagerpad (18) gekoppelt wird, wobei an einer Stirnseite des Gleitlagerpads (18) ein mit dem Verbindungselement (101) zusammenwirkendes Formelement (69), insbesondere ein Gewinde, ausgebildet ist.

3. Verfahren nach Anspruch 1 oder 2, **dadurch gekennzeichnet, dass** ein Grundgestell (84) mittels eines Befestigungselementes (86), insbesondere mittels eines Spanngurtes, an der Rotorwelle (16) befestigt wird.

4. Verfahren nach Anspruch 1 oder 2, **dadurch gekennzeichnet, dass** das Grundgestell (84) mittels eines Befestigungsmittels an einem Lagerbock (17) befestigt wird.

5. Verfahren nach einem der Ansprüche 1 bis 4, **dadurch gekennzeichnet, dass** zum Entfernen des Gleitlagerpads (18) vom Manipulationsarm (94) und zum Befestigen eines neuen Gleitlagerpads (18) am Manipulationsarm (94) ein Hebearm (125) verwendet wird, wobei der Hebearm (125) derart an einer Umfangsseite (74) des Gleitlagerpads (18) befestigt wird, dass der Manipulationsarm (94) und der Hebearm (125) gleichzeitig am Gleitlagerpad (18) befestigt sein können.

6. Verfahren nach einem der Ansprüche 1 bis 5, **dadurch gekennzeichnet, dass** die Bewegung des Manipulationsarmes (94) relativ zum Grundgestell (84) der Gleitlagerpadwechselvorrichtung (83) mittels eines Akkuschraubers angetrieben wird.

## Claims

1. A method for changing slide bearing pads (18) arranged on a rotor shaft (16) of a rotor bearing arrangement (8) of a wind turbine (1), comprising the method steps:
- moving the slide bearing pad (18) to be changed to a removal opening (41) by rotating the rotor shaft (16);
- releasing an axial securing element (51), or releasing fastening screws (113), of the slide bearing pad (18) to be changed;
- axially removing the slide bearing pad (18) to be changed through the removal opening (41);
- axially inserting a new slide bearing pad (18) through the removal opening (41);
- fixing the new slide bearing pad (18) by means of the axial securing element (51), or by means of the fastening screws (113),
**characterized in that** a slide bearing pad changing device (83) with a manipulation arm (94) is used for axially removing the slide bearing pad (18) to be changed and for axially inserting a new slide bearing pad (18), wherein the manipulation arm (94) is configured for coupling with the slide bearing pad (18).

2. The method according to claim 1, **characterized in that** the manipulation arm (94) is coupled with the slide bearing pad (18) by means of a connection element (101), in particular by means of a screw, wherein a form element (69), in particular a thread, that interacts with the connection element (101) is configured on a front end of the slide bearing pad (18).

3. The method according to claim 1 or 2, **characterized in that** the base frame (84) is affixed to the rotor shaft (16) by means of a fastening element (86), in particular by means of a tensioning strap.

4. The method according to claim 1 or 2, **characterized in that** the base frame (84) is affixed to a bearing block (17) by means of a fastening means.

5. The method according to any one of the claims 1 to 4, **characterized in that** a lifting arm (125) is used for removing the slide bearing pad (18) from the manipulation arm (94) and for affixing a new slide bearing pad (18) to the manipulation arm (94), wherein the lifting arm (125) is affixed to a circumferential face (74) of the slide bearing pad (18) such that the manipulation arm (94) and the lifting arm (125) can be affixed to the slide bearing pad (18) simultaneously.

6. The method according to any one of the claims 1 to 5, **characterized in that** the movement of the manipulation arm (94) relative to the base frame (84) of the slide bearing pad changing device (83) is driven by a cordless screwdriver.

## Revendications

1. Procédé de remplacement de coussinets de palier lisse (18) agencés sur un arbre de rotor (16) d'un palier de rotor (8) d'une éolienne (1), comprenant les étapes ci-dessous consistant à :
- déplacer le coussinet de palier lisse (18) à remplacer vers un orifice de prélèvement (41) par rotation de l'arbre de rotor (16) ;
- desserrer un élément de blocage axial (51) ou des vis de fixation (113) du coussinet de palier lisse (18) à remplacer ;
- retirer de manière axiale le coussinet de palier lisse (18) à remplacer à travers l'orifice de prélèvement (41) ;
- insérer de manière axiale un nouveau coussinet de palier lisse (18) à travers l'orifice de prélèvement (41) ;
- immobiliser le nouveau coussinet de palier lisse (18) au moyen de l'élément de blocage axial (51) ou au moyen des vis de fixation (113),
**caractérisé en ce qu'**un dispositif de remplacement de coussinet de palier lisse (83) avec un bras de manipulation (94) est utilisé pour le retrait axial du coussinet de palier lisse (18) à remplacer et pour l'insertion axiale d'un nouveau coussinet de palier lisse (18), dans lequel le bras de manipulation (94) est réalisé en vue d'un couplage avec le coussinet de palier lisse (18).

2. Procédé selon la revendication 1, **caractérisé en ce que** le bras de manipulation (94) est couplé au coussinet de palier lisse (18) au moyen d'un élément de liaison (101), en particulier au moyen d'une vis, dans lequel un élément de forme (69), en particulier un filetage, coopérant avec l'élément de liaison (101) est réalisé au niveau d'une face frontale du coussinet de palier lisse (18).

3. Procédé selon la revendication 1 ou 2, **caractérisé en ce qu'**un châssis de base (84) est fixé à l'arbre de rotor (16) au moyen d'un élément de fixation (86), en particulier au moyen d'une sangle de serrage.

4. Procédé selon la revendication 1 ou 2, **caractérisé en ce que** le châssis de base (84) est fixé à un support de palier (17) au moyen d'un moyen de fixation.

5. Procédé selon l'une quelconque des revendications 1 à 4, **caractérisé en ce qu'**un bras de levage (125) est utilisé pour retirer le coussinet de palier lisse (18) du bras de manipulation (94) et pour fixer un nouveau coussinet de palier lisse (18) au bras de manipulation (94), dans lequel le bras de levage (125) est fixé sur un côté périphérique (74) du coussinet de palier lisse (18) de telle manière que le bras de manipulation (94) et le bras de levage (125) peuvent être fixés de manière simultanée au coussinet de palier lisse (18).

6. Procédé selon l'une quelconque des revendications 1 à 5, **caractérisé en ce que** le déplacement du bras de manipulation (94) par rapport au châssis de base (84) du dispositif de remplacement de coussinet de palier lisse (83) est entraîné au moyen d'une visseuse sans fil.
